# EUROPEAN PATENT APPLICATION

(11) **EP 2 827 575 A1**
(43) Date of publication of application: **21.01.2015**
(21) Application number: 12871556.2
(22) Date of filing: 17.12.2012
(51) Int. Cl.: H04N 1/04, G03B 27/54, H04N 1/028

(54) **LIGHT SOURCE DEVICE**

(30) Priority: 14.03.2012 JP 2012057522
(71) Applicant: Mitsubishi Electric Corporation, Tokyo 100-8310 (JP)
(72) Inventor: ARIMOTO, Hironobu, Tokyo 100-8310 (JP); FUJIUCHI, Akiko, Tokyo 100-8310 (JP); SHOJI, Toshiaki, Tokyo 100-8310 (JP)
(74) Representative: Sajda, Wolf E.
(86) International application number: PCT/JP2012/082645
(87) International publication number: WO 2013/136619

(57) **Abstract**

Variation in the illuminance of a light source device in the longitudinal direction is suppressed and the emitted light is efficiently emitted to an illuminated object. A light guide (3) propagates light emitted by a light source (1) and entering therein from an end in the long axis direction. A fluorescent material layer (5) surrounds the outer periphery of the light guide (3) except for an opening along the long axis direction, absorbs part of the light exiting from the periphery of the light guide (3), and emits fluorescence. A light reflecting pattern is provided on the outer periphery of the light guide (3) opposite to the fluorescent material layer (5). In the course of the light having entered therein from the end being propagated in the light guide (3), the fluorescent material layer (5) captures light reflected by the light reflecting pattern and exiting from the outer periphery of the light guide (3), reflects part of the light, and emits light of different wavelengths. Then, the light emitted by the fluorescent material layer (5) is transmitted into the light guide (3), and the light having entered therein from the end and the light emitted by the fluorescent material layer are emitted to the illuminated object from a portion of the light guide (3) that is exposed or protruding in the opening of the fluorescent material layer (5).

## Description

### Technical Field

The present invention relates to a light source device emitting a strip of light flux. More specifically, the present invention relates to a light source device emitting a strip of light flux using a light guide and fluorescent material.

### Background Art

Many devices such as copy machines and scanners used for computerizing information such as an image, characters, or a pattern in the form of a print on a paper medium illuminate an object to read with a linear light source such as a xenon (Xe) lamp. For example, Patent Literature 1 discloses an aperture fluorescent lamp having a fluorescent material film except for a fluorescent material-free portion (a strip-shaped light emitter) and using a xenon gas as the discharge medium.

On the other hand, in place of Xe lamps, light sources using a blue light or ultraviolet radiation -emitting LED have become widely used as a linear light source. For example, Patent Literature 2 discloses a light source assembly introducing blue light from an LED into a rod-shaped lens from one end and emitting complex "white" light by means of a fluorescent strip and non-fluorescent strip provided on the side surface of the rod-shaped lens.

Patent Literature 3 discloses an elongated light source (linear light source) in which a transparent plate (such as a glass plate) on which a fluorescent material in which multiple types of emission colors are blended is applied is provided above an ultraviolet-emitting LED so that the ultraviolet rays emitted by the LED falls on the fluorescent material, whereby visible light is emitted.

Patent Literature 4 discloses an illumination device illuminating an original copy with combined visible light comprising visible light converted from ultraviolet rays by a fluorescent material applied on the inner surface of the tube of a light source and visible light converted from ultraviolet rays directly emitted through an opening of the light source by a fluorescent member comprising a fluorescent material and reflecting film.

Patent Literature 5 discloses a line light source in which a pattern created by printing a fluorescent material on the inner surface of a reflecting sheet as an outer tube or a pattern created by printing a fluorescent material on the inner surface of a cover is attached or covered in contact with the light guide.

Patent Literature 6 discloses a light source device in which a fluorescent material layer is provided on the inner periphery of a cylindrical translucent tube along the entire circumference, the fluorescent material is excited with light from multiple LED elements arranged in the longitudinal direction on a substrate extending along the longitudinal direction of the translucent tube and emits excited light (yellow light) of a wavelength longer than the peak wavelength of the blue light emitted by the LED elements, whereby mixed color light comprising the blue light and excited light (yellow light) mixed in color is emitted.

Patent Literature 7 discloses a linear light source device in which a filter cutting off the long-wavelength components in the visible range is provided on the outer surface of the back of the light guide.

### Citation List

### Patent Literature

- Patent Literature 1:: Unexamined Japanese Patent Application Kokai Publication JP-A-2002-190 919;
- Patent Literature 2:: Unexamined Japanese Patent Application Kokai Publication JP-A-2000-127 505;
- Patent Literature 3:: Unexamined Japanese Patent Application Kokai Publication JP-A-2004-085 824;
- Patent Literature 4:: Unexamined Japanese Patent Application Kokai Publication JP-A-H10-079 835;
- Patent Literature 5:: Unexamined Japanese Patent Application Kokai Publication JP-A-2006-067 197;
- Patent Literature 6:: Unexamined Japanese Patent Application Kokai Publication JP-A-2011-250 028; and
- Patent Literature 7:: Unexamined Japanese Patent Application Kokai Publication JP-A-2011-216 945.

### Summary of the Invention

### Technical Problem

The fluorescent lamp described in the Patent Literature 1 has a problem that a power source circuit to generate a high voltage is required to apply a high voltage of several kV to the Xe lamp in order to excite the fluorescent material layer formed on the inner wall of a glass tube with ultraviolet rays generated by discharge in a Xe gas and emit fluorescence. Furthermore, use of a discharge phenomenon leads to significant heat generation. Another problem is that as the temperature of the lamp rises, the fluorescent material emission efficiency and luminance deteriorate, whereby the luminance significantly changes with time.

The light source assembly described in the Patent Literature 2 uses a blue LED and therefore can operate with a low voltage. However, although a fluorescent strip of the rod-shaped light source assembly that constitutes part of the carriage unit contained in the housing is referred to, no reference is made to a combination with the peripheral members such as the housing and carriage unit.

In the elongated light source described in the Patent Literature 3, a transparent plate (such as a glass plate) on which a fluorescent material is applied is disposed above an ultraviolet-emitting LED. Visible radiation (VR) and an ultraviolet radiation (UV) are combined in the light illumination direction. A problem is that the spectral ratio of the ultraviolet radiation on the reading object becomes higher when the intensity of the ultraviolet radiation is higher, and the fluorescence conversion efficiency deteriorates when the intensity of the ultraviolet radiation is lower.

Another problem is that since many LEDs are lined up in a row in accordance with the length in the longitudinal direction (the reading width direction), individual LEDs will differentiate in light conversion efficiency due to change with time or the like, whereby uniform illumination becomes difficult. The problem caused by many LEDs lined up in a row also applies to the light source device described in the Patent Literature 6.

The illumination device described in the Patent Literature 4 has a problem that since a fluorescent material is applied on the inner surface of the tube of the light source, the fluorescent material applied in the region perpendicular to the sub-scan direction has an uneven application thickness, whereby it is difficult to assure uniformity. Furthermore, no details are given in regard to the long, cylindrical light source being held by an enclosure frame.

In the line light source described in the Patent Literature 5, a pattern created by printing a fluorescent material on the inner surface of a reflecting sheet as an outer tube or a pattern created by printing a fluorescent material on the inner surface of a cover is attached or covered in contact with the light guide. Therefore, a problem is that a sufficient thickness is not ensured for the fluorescent material layer, whereby the emission efficiency of the fluorescent material deteriorates.

As for the linear light source device described in the Patent Literature 7, no detailed description in regard to light conversion for fluorescence and no combination with the fluorescent material and its peripheral members is referred to.

The present disclosure is invented to solve the above problems and an exemplary objective of the present disclosure is to reduce variation in the illuminance in the longitudinal direction of a light source device and efficiently emit the light emitted by the fluorescent material to an illuminated object.

### Solution to the Problem

In order to achieve the above objective, the light source device according to the present disclosure comprises a light source emitting light; a rod-shaped light guide at an end of which the light source is disposed and propagating the light emitted from the light source and entering therein from the end in the long axis direction; a fluorescent material layer surrounding the outer periphery of the light guide except for an opening continuous along the long axis direction of the light guide, exposing or protruding part of the light guide in the opening, absorbing part of light exiting from the outer periphery of the light guide, and emitting excited fluorescence; and a linear light reflecting pattern provided along the long axis direction on the outer periphery of the light guide at a position facing at least part of the fluorescent material layer via the interior of the light guide.

In the course of the light having entered therein from the end being propagated in the light guide, the fluorescent material layer captures the light scattered or regularly reflected by the light reflecting pattern and exiting from the outer periphery of the light guide, reflects part of the captured light, and emits light of wavelengths different from that light.

Then, the light emitted by the fluorescent material layer is transmitted into the light guide, and the light having entered therein from the end and the light emitted by the fluorescent material layer are emitted to an illuminated object from a portion of the light guide that is exposed or protruding in the opening of the fluorescent material layer.

### Advantageous Effects of the Invention

The present disclosure can reduce variation in the illuminance in the longitudinal direction of a light source device and efficiently emit the light emitted by the fluorescent material to an illuminated object.

### Brief Description of the Drawings

- FIG. 1: is a cross-sectional view of the light source device according to Embodiment 1 of the present disclosure when seen in the direction perpendicular to the long axis of the light guide;
- FIG. 2: is a perspective view of the light source device according to Embodiment 1;
- FIG. 3: is an exploded, perspective view of the light source device according to Embodiment 1;
- FIG. 4: is a cross-sectional view of the light source device according to Embodiment 1 when seen in the long axis direction of the light guide;
- FIG. 5: is a cross-sectional view showing the light path in the long axis direction of the light source device according to Embodiment 1;
- FIG. 6: is a cross-sectional view showing the light path perpendicular to the long axis direction of the light source device according to Embodiment 1;
- FIG. 7: is an exploded, perspective view showing the light source device according to a modified embodiment of Embodiment 1;
- FIG. 8: is a cross-sectional view of the light source device according to a modified embodiment of Embodiment 1 when seen in the long axis direction of the light guide;
- FIG. 9: is a graphical representation for explaining the relationship between the thickness of the fluorescent material and the emission luminance;

- FIG. 10: is a graphical representation showing the luminance/emission property of the light source device according to Embodiment 1;
- FIG. 11: is a cross-sectional view of the light source device according to Embodiment 2 of the present disclosure when seen in the direction perpendicular to the long axis of the light guide;
- FIG. 12A: is a perspective view of the light source device according to Embodiment 2;
- FIG. 12B: is a cross-sectional view of the light source device according to Embodiment 2 when seen in the long axis direction of the light guide;
- FIG. 13: is a graphical representation showing the property of the ultraviolet cutoff filter of the light source device according to Embodiment 2;
- FIG. 14A: is a cross-sectional view showing the width of the reflecting patterns of the light source device according to Embodiment 1 or 2;
- FIG. 14B: is a cross-sectional view showing a different exemplary width of the reflecting patterns;
- FIG. 15A: is a cross-sectional view showing the reflecting patterns at a position of the protrusions of the light source device according to Embodiment 1 or Embodiment 2;
- FIG. 15B: is a cross-sectional view showing the reflecting patterns at a midpoint position between the protrusions;
- FIG. 16A: is a cross-sectional view showing the fluorescent material layer at a position of the protrusions of the light source device according to Embodiment 3 of the present disclosure;
- FIG. 16B: is a cross-sectional view showing the fluorescent material layer at a midpoint position between the protrusions of the light source device according to Embodiment 3;
- FIG. 17A: is a cross-sectional view showing a different exemplary fluorescent material layer at a position of the protrusions of the light source device according to Embodiment 3;
- FIG. 17B: is a cross-sectional view of the different example at a midpoint position between the protrusions;
- FIG. 18A: is a cross-sectional view showing a position of the protrusions of the light source device according to Embodiment 4 of the present disclosure;
- FIG. 18B: is a cross-sectional view showing a midpoint position between the protrusions of the light source device according to Embodiment 4;
- FIG. 19A: is a cross-sectional view showing a position of the protrusions of the light source device according to Embodiment 5 of the present disclosure;
- FIG. 19B: is a cross-sectional view showing a midpoint position between the protrusions of the light source device according to Embodiment 5;
- FIG. 20A: is a cross-sectional view showing a position of the protrusions of the light source device according to a modified embodiment of Embodiment 5;
- FIG. 20B: is a cross-sectional view showing a midpoint position between the protrusions of the light source device according to the modified embodiment;
- FIG. 21A: is a cross-sectional view showing a position of the protrusions of the light source device according to Embodiment 6 of the present disclosure;
- FIG. 21B: is a cross-sectional view showing a midpoint position between the protrusions of the light source device according to Embodiment 6;
- FIG. 22A: is a cross-sectional view showing a position of the protrusions of the light source device according to a modified embodiment of Embodiment 6;
- FIG. 22B: is a cross-sectional view showing a midpoint position between the protrusions of the light source device according to the modified embodiment;
- FIG. 23A: is a cross-sectional view showing a position of the protrusions of the light source device according to Embodiment 7 of the present disclosure;
- FIG. 23B: is a cross-sectional view showing a midpoint position between the protrusions of the light source device according to Embodiment 7;
- FIG. 24A: is a cross-sectional view showing a position of the protrusions of the light source device according to a modified embodiment of Embodiment 7;

- FIG. 24B: is a cross-sectional view showing a midpoint position between the protrusions of the light source device according to the modified embodiment;
- FIG. 25: is a cross-sectional view of the vicinity of the center of the light source device according to Embodiment 8 of the present disclosure;
- FIG. 26: is a cross-sectional view of the light source device according to Embodiment 8 when seen in the direction perpendicular to the long axis;
- FIG. 27: is an exploded, perspective view of the vicinity of the holder of the light source device according to Embodiment 9 of the present disclosure;
- FIG. 28A: is a cross-sectional view of the light guide portion of the light source device according to Embodiment 9;
- FIG. 28B: is a cross-sectional view of the light guide portion of the light source device according to a modified embodiment of Embodiment 9;
- FIG. 29: is an exploded, perspective view of the vicinity of the holder of the light source device according to Embodiment 10 of the present disclosure;
- FIG. 30A: is a cross-sectional view of the light source device according to Embodiment 10 when seen in the long axis direction;
- FIG. 30B: is a perspective view of the light guide and casing of the light source device according to Embodiment 10;
- FIG. 31A: is a cross-sectional view of the light source device according to Embodiment 11 of the present disclosure when seen in the direction perpendicular to the long axis of the light guide;
- FIG. 31B: is an exploded, perspective view of the vicinity of the holder of the light source device according to Embodiment 11;
- FIG. 32: is a cross-sectional view of the light source device according to Embodiment 11 when seen in the long axis direction;
- FIG. 33: is a cross-sectional view of the light source device according to a different structure of Embodiment 11 when seen in the long axis direction;
- FIG. 34: is a cross-sectional view of the light source device according to a modified embodiment of Embodiment 11 when seen in the long axis direction;
- FIG. 35: is a cross-sectional view of the light source device according to a different modified embodiment of Embodiment 11 when seen in the long axis direction;
- FIG. 36: is an exploded, perspective view of the vicinity of the holder of the light source device according to Embodiment 12 of the present disclosure;
- FIG. 37: is a perspective view of the light guide portion of the light source device according to Embodiment 12;
- FIG. 38: is a cross-sectional view of the vicinity of the holder of the light source device according to Embodiment 12;
- FIG. 39: is a detailed, cross-sectional view of the casing and fluorescent material layer of the light source device according to Embodiment 12;
- FIG. 40: is a detailed, cross-sectional view of the casing and fluorescent material layer of the light source device according to Embodiment 12;
- FIG. 41: is a detailed, cross-sectional view of the casing and fluorescent material layer of the light source device according to Embodiment 12;
- FIG. 42: is a detailed, cross-sectional view of the casing and fluorescent material layer of the light source device according to Embodiment 12;
- FIG. 43A: is a detailed, perspective view of the casing and fluorescent material layer of the light source device according to Embodiment 13 of the present disclosure;
- FIG. 43B: is a cross-sectional view for explaining the mechanism of limiting the output angle of the complex light to the opening side of the casing;
- FIG. 44: is a cross-sectional view of the light source device according to Embodiment 13 when seen in the long axis direction;
- FIG. 45: is a detailed, perspective view of the casing and fluorescent material layer of the light source device according to Embodiment 12; and
- FIG. 46: is a detailed, perspective view of the casing and fluorescent material layer of the light source device according to Embodiment 13.

### Description of Embodiments

Embodiments of the present disclosure will be described hereafter with reference to the drawings. Here, in the figures, the same or equivalent components are referred to by the same reference signs.

### Embodiment 1

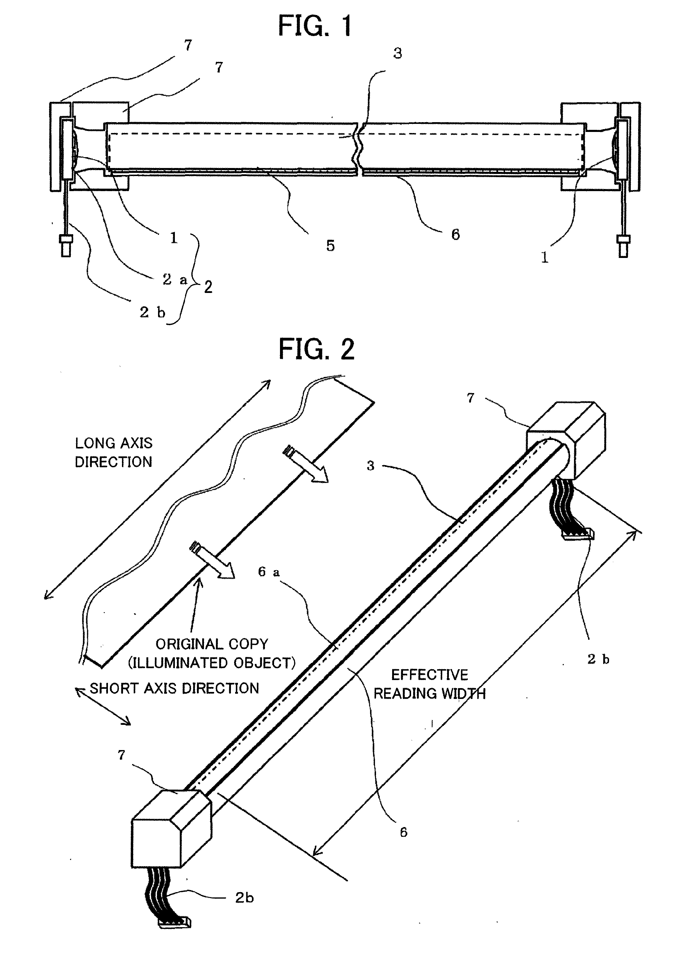

FIG. 1 is a cross-sectional view of the light source device according to Embodiment 1 of the present disclosure when seen in the direction perpendicular to the long axis of the light guide. FIG. 2 is a perspective view of the light source device according to Embodiment 1.

The light source device comprises an LED circuit 2, a light guide 3, a casing 6, and a holder 7. The LED circuit 2 comprises a light source 1, a substrate 2a, and a connector 2b. The light guide 3 is housed in the casing 6. The light guide 3 and casing 6 are held by the holder 7 at their ends. The light guide 3 is in the form of a column (rod) of which the center axis runs in the longitudinal direction. The direction of the center axis of the columnar light guide 3 is referred to as the long axis direction (or the longitudinal direction) and the direction perpendicular to the long axis direction is referred to as the short axis direction (or the width direction).

Furthermore, the outer surfaces of the light guide 3 that intersect with the center axis are referred to as the end faces and the outer surface of the light guide 3 that is formed by moving a line (generating line) parallel to the center axis is referred to as the side surface or outer periphery.

The casing 6 surrounds the outer periphery of the light guide 3 except for a strip-shaped opening 6a formed along the long axis direction of the light guide 3. The light source 1 is disposed at an end of the light guide 3 to face the end face. The light source 1 is mounted on the substrate 2a.

The LED circuit 2 is held by the holder 7 so that the light source 1 faces the end face of the light guide 3. The light source 1 is, for example, an LED (light emitting diode). In Embodiment 1, the light source 1 emits blue light of wavelengths of 430 nm to 470 nm.

The connector (external terminal) 2b is connected to the substrate 2a and the light source 1 is powered via the connector 2b. The substrate 2a is made of, for example, a glass epoxy resin. A heat-releasing plate can be provided on the surface of the substrate 2a opposite to the surface on which the light source 1 is mounted. In some drawings below, the connector 2b and heat-releasing plate 2c are omitted.

The light guide 3 is formed by molding a material having a refractive index (n) of 1.5 or higher such as transparent soda glass, transparent resin, or transparent sapphire having a transmittance of 80 % or so into a rod shape, and is mirror-finished at the ends. Light emitted by the light source 1 enters the light guide 3 from the end of the light guide 3. The light guide 3 guides the light having entered therein from the end along the longitudinal direction (long axis direction) of the light guide 3.

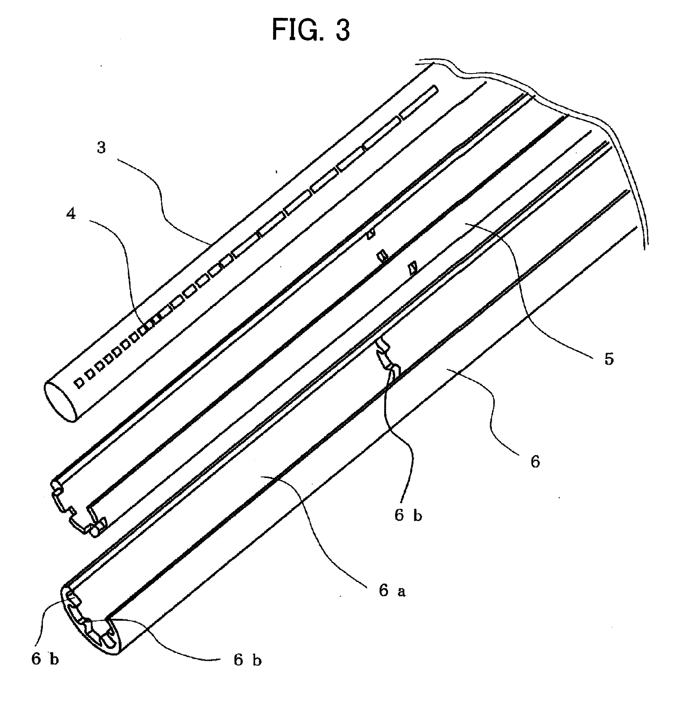

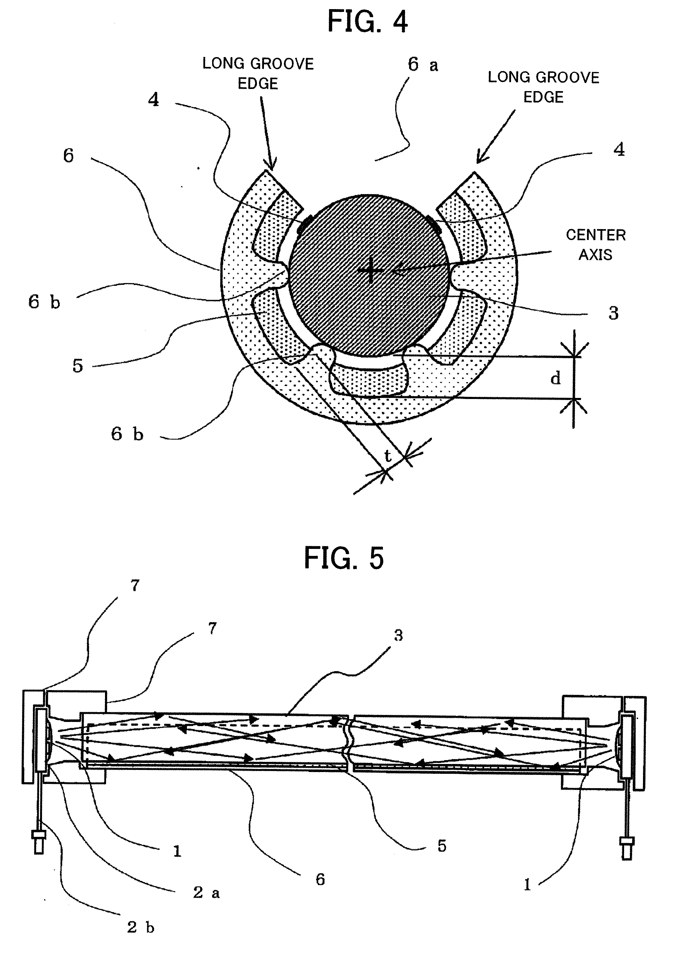

FIG. 3 is an exploded, perspective view of the light source device according to Embodiment 1. FIG. 4 is a cross-sectional view of the light source device according to Embodiment 1 when seen in the long axis direction of the light guide. A fluorescent material layer 5 is interposed between the outer periphery of the light guide 3 and the surface of the casing 6 that surrounds the light guide 3. Light guided by the light guide 3 exits from the outer periphery and is captured by the fluorescent material layer 5.

The fluorescent material layer 5 absorbs part of the captured light and emits excited fluorescence. Part of the light captured by the fluorescent material layer 5 is reflected by the fluorescent material layer 5. The fluorescence emitted by the fluorescent material layer 5 and the reflected light enter the light guide 3 from the outer periphery.

Part of the light guided by the light guide 3 and the fluorescence emitted by the fluorescent material layer 5 are emitted outside through the opening 6a of the casing 6. The light exiting from the opening 6a forms a strip-shaped light flux wide in the long axis direction and illuminates the reading position of an original copy (illuminated object) (see FIG. 2).

The path of light passing through the light guide 3 in the long axis direction is referred to as the light guide path and the path of light passing through the light guide 3 in the direction perpendicular to the long axis direction is referred to as the transversal path (transmission path). The transversal path (transmission path) can also be called the emitted fluorescence exit path. Incidentally, it can be said that the path along which the light is guided to the exit region in the light source device according to this embodiment is predominantly formed by the transversal path (transmission path).

Furthermore, the long axis direction corresponds to the main scan direction of the image reading device in which the light source device according to the present application is installed, and the direction perpendicular to the long axis direction (the short axis direction or the width direction) corresponds to the sub-scan direction of the image reading device (the direction in which the illuminated object such as an original copy is conveyed).

In the embodiment shown in FIG. 4, a white casing 6 (also called a reflecting plate, casing, or curved reflecting plate) having a fluorescent material layer (fluorescent material) 5 applied on the inner periphery that is spaced from the outer periphery of the cylindrical light guide 3 by a given space (d) of 0.1 mm or so is disposed to surround the light guide 3.

The outer periphery of the light guide 3 and the inner periphery of the casing 6 (the surface surrounding the light guide 3) are arranged in the manner that their cross-sections perpendicular to the long axis direction share a center, namely are concentric. The center axes of the light guide 3 and casing 6 are parallel to the reading region (effective reading width).

With a long groove of which the width perpendicular to the long axis direction is constant being formed along the long axis direction, the casing 6 has an opening 6a formed to serve as an outlet (exit region) through which the light is emitted to the illuminated object. Part of the light guide 3 is exposed in the opening 6a in the form of a long groove along the long axis direction.

Although not illustrated in Embodiments 1 to 9, part of the light guide 3 can be protruding from the opening 6a. The edges of the opening 6a along the long axis direction (which correspond to the ends of the casing 6 or the casing 6 and fluorescent material layer 5 along the long axis direction) are called the long groove edges.
Linear light reflecting patterns 4 are provided along the long axis direction on the outer periphery of the light guide 3 facing the long groove edges of the opening 6a on either side thereof with a given space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 3.

In the embodiment of FIG. 4, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 3 at positions facing at least part of the fluorescent material layer 5 via the interior of the light guide 3.

Part of the blue light passing through the light guide 3 along the light guide path is scattered or regularly reflected by the light reflecting patterns 4, transmitted within the light guide 3 along the transversal path, exits from the surface of the light guide 3 opposite to a light reflecting pattern 4, and is captured by the fluorescent material layer 5 on the casing 6. The light reflecting pattern 4 can extend beyond the long groove edges and partly or entirely extend into the opening 6a (both in the long axis direction and short axis direction).

The light source device (line light source) according to the present application including Embodiment 1 has an opening 6a formed at a single position. However, it is possible to form openings 6a along the long axis direction at two positions when seen in the cross-section of FIG. 4 so that light (complex light described later) is emitted in two directions.

Openings 6a can easily be formed along the long axis direction at two positions by making the portion of the casing 6 at the end in the longitudinal direction that is cut away by the opening 6a in FIG. 3 connected, in other words making the opening discontinued from the hole at the end of the casing 6 through which the light guide 3 is inserted.

A fluorescent material layer 5 having a thickness (t) of, for example, approximately 50 µm is applied to the inner surface of the casing 6 (the surface surrounding the outer periphery of the light guide 3). As the fluorescent material layer 5, for example, a mixture of a fluorescent material emitting red light of a wavelength of approximately 600 nm or so and a fluorescent material emitting green light of a wavelength of 525 nm or so is applied.

The blue light is captured by the fluorescent material layer 5, and part of the blue light is reflected by the fluorescent material layer 5, travels through the light guide 3 crosswise, and is emitted to the illuminated object through the opening 6a. The other blue light is absorbed by the fluorescent material layer 5 and excited fluorescence is emitted. In other words, the fluorescent material layer 5 emits two-component complex light (mixed color light) subjected to conversion to light of wavelengths different from the blue light.

The fluorescence emitted by the fluorescent material layer 5 travels through the light guide 3 crosswise and is emitted to the illuminated object through the opening 6a as complex light. Then, quasi-white light that is a mixture of blue, red, and green lights is emitted to the illuminated object. Incidentally, the light guide 3 is fixed by means of the protrusions 6b provided at both ends and the center of the casing 6 as shown in FIG. 3.

When the fluorescent material layer 5 is in the form of a sheet, it is known from the FIG. 3 that the protrusions 6b can support the light guide 3 via the holes of the fluorescent material layer 5. Furthermore, when the fluorescent material layer 5 is in the form of a sheet, the fluorescent material layer 5 can be positioned with the protrusions 6b, namely the casing 6 by inserting the protrusions 6b into the holes of the fluorescent material layer 5.

The light source device according to Embodiment 1 is constructed by housing the light source 1 placed on the substrate 2a of the LED circuit 2 in the hollow of the hollowed holder 7 at one end and inserting the end of the casing 6 in which the light guide 3 is installed at the other end.

In FIG. 1, the holder 7 is provided at either end of the casing 6 and the blue light emitted by the light sources 1 enters the light guide 3 from both ends. Needless to say, it is possible to provide the holder 7 and light source 1 only at one end of the light guide 3. The relationship between the light source 1 and holder 7 will be described hereafter.

The substrate 2a provided at the end of the light guide 3 and on which the blue light-emitting light source 1 is mounted is fixed by the holder 7 as the holding mechanism. The LED circuit 2 is attached to the light guide 3 and casing 6 in the manner the optical axis of the light source 1 and the optical center position of the illumination axis along which the light passes through the end of the light guide 3 coincide with each other. The light source 1 contains one or multiple blue LEDs. The holder 7 holds the light source 1 at a given distance from the end of the light guide 3 so that the blue light emitted by the light source 1 is introduced in the light guide 3 in a stable manner.

In order to prevent the light guide 3 and/or casing 6 from being displaced, the holder 7 has, for example, a two-tier fitting inset structure shown in FIG. 1 for positioning at the ends of the light guide 3. The holder 7 is fitted on the light guide 3, for example, to a depth of 2 mm or more when the light guide 3 has a diameter of 4 mm so that only the blue light from the light source 1 of which the incident angle to the surface of the light guide 3 is smaller than the total reflection angle enters the light guide 3.

The holder 7 has an external structure that does not allow direct light from the light source 1 to directly play a role of illumination light. Incidentally, it is possible to make the portion of the casing 6 at the end in the long axis direction that is cut away by the opening 6a in FIG. 3 connected to form openings 6a along the long axis direction at two positions for preventing deterioration in performance of the light source device.

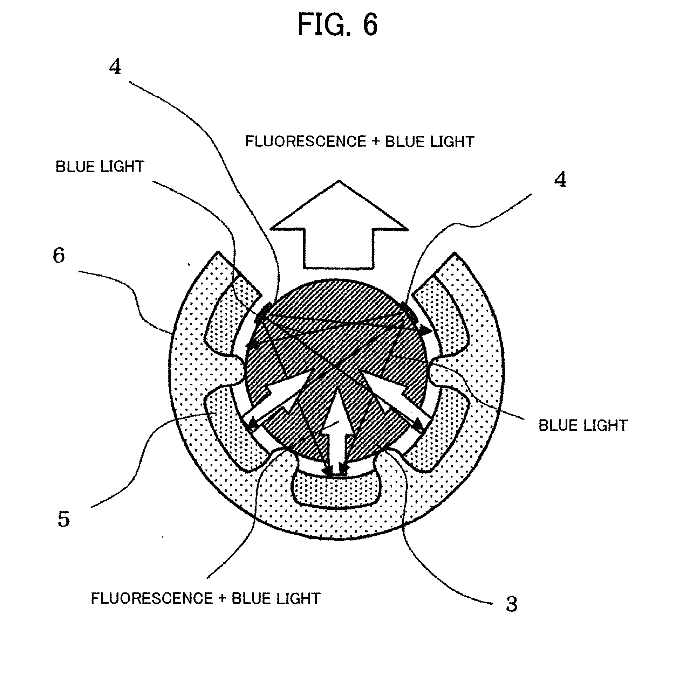

The mechanism of the light source device according to Embodiment 1 will be described hereafter. FIG. 5 is a cross-sectional view showing the light path in the long axis direction of the light source device according to Embodiment 1. FIG. 6 is a cross-sectional view showing the light path perpendicular to the long axis direction of the light source device according to Embodiment 1.

The light emitted by the light source 1 is guided within the cylindrical (rod-shaped) light guide 3 made of a transparent material from one end to the other. In the course of reflecting and propagating the blue light having entered therein from the end along the long axis direction, the light is scattered or regularly reflected by the light reflecting patterns 4 provided on the light guide 3 and emitted to the fluorescent material layer 5.

The fluorescence emitted by the fluorescent material layer 5 and the blue light reflected by the fluorescent material layer 5 are mixed in color and exit from the opening 6a of the casing 6 via the light guide 3. Then, complex light (mixed color light) of the fluorescence and blue light is emitted to the illuminated object such as an original copy placed to face the opening 6a.

The light guide 3 has a higher refractive index than the external space. Therefore, upon reaching the mirror-like surface of the light guide 3, the light having entered the light guide 3 from the end enters at an angle larger than the total reflection angle, is totally reflected by the surface, and then is propagated within the light guide 3 along the light guide path.

Part of the light propagated within the light guide 3 is reflected by the light reflecting patterns 4 and with the reflecting angle being changed, exits outside from the surface of the light guide 3 at an angle smaller than the total reflection angle. The emerging light is emitted to the fluorescent material layer 5 applied on the inner surface of the casing 6.

The casing 6 not only serves as the support member for the light guide 3 by means of the protrusions 6b but also plays a role of the support member for the fluorescent material layer 5 provided between the surface of the casing 6 that surrounds the light guide 3 and the outer periphery of the light guide 3. In Embodiment 1, the casing 6 also plays a role of the support substrate (support member) for the fluorescent material layer 5 formed on the inter surface of the casing 6 on the side of the casing 6 closer to the light guide 3.

The outer periphery of the light guide 3 and the inner periphery of the casing 6 are held with a given space (gap). With the space being made constant, it is assured that the fluorescent material layer 5 is stably positioned with respect to the light guide 3. For example, as shown in FIGS. 3 and 4, small protrusions 6b (the support member for the light guide 3) having a height of approximately 0.1 mm and making contact with the light guide 3 in a small area are formed on the inner surface of the casing 6 at three positions, both ends and the center. The close contact between the protrusions 6b and light guide 3 maintains a given space (d > t) between the fluorescent material layer 5 formed on the inner surface of the casing 6 and the light guide 3.

The fluorescent material layer 5 is formed by a dye or pigment having a red, green (yellow green), or other fluorescent wavelength. The fluorescent material layer 5 is formed at least on the inner surface of the casing 6 that faces the light reflecting patterns 4 on the light guide 3.

The blue light emitted from the light guide 3 to fluorescent material layer 5 turns into complex light of the fluorescence from the fluorescent material layer 5 and the scattered/reflected light of the blue light reflected on the surface of the fluorescent material layer 5. The complex light is transmitted through the light guide 3 along the transversal path and emitted through the opening 6a of the casing 6. Consequently, the complex light (quasi-white light) illuminates the illuminated object.

In Embodiment 1, the protrusions 6b of the casing 6 are provided at both ends and the center of the casing 6. As a mechanism for maintaining the space between the light guide 3 and the casing 6 on which the fluorescent material layer 5 is applied, the protrusions 6b are formed on the inner surface of the casing 6 at given intervals in the long axis direction in Embodiment 1. Since the light guide 3 is supported by the protrusions 6b, it is easy to hold the fluorescent material layer 5 and set the distance between the fluorescent material layer 5 and light guide 3.

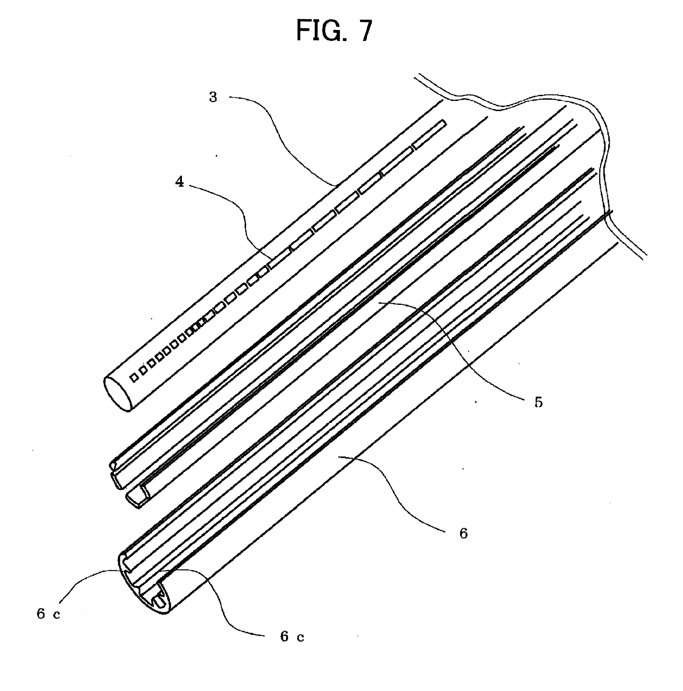

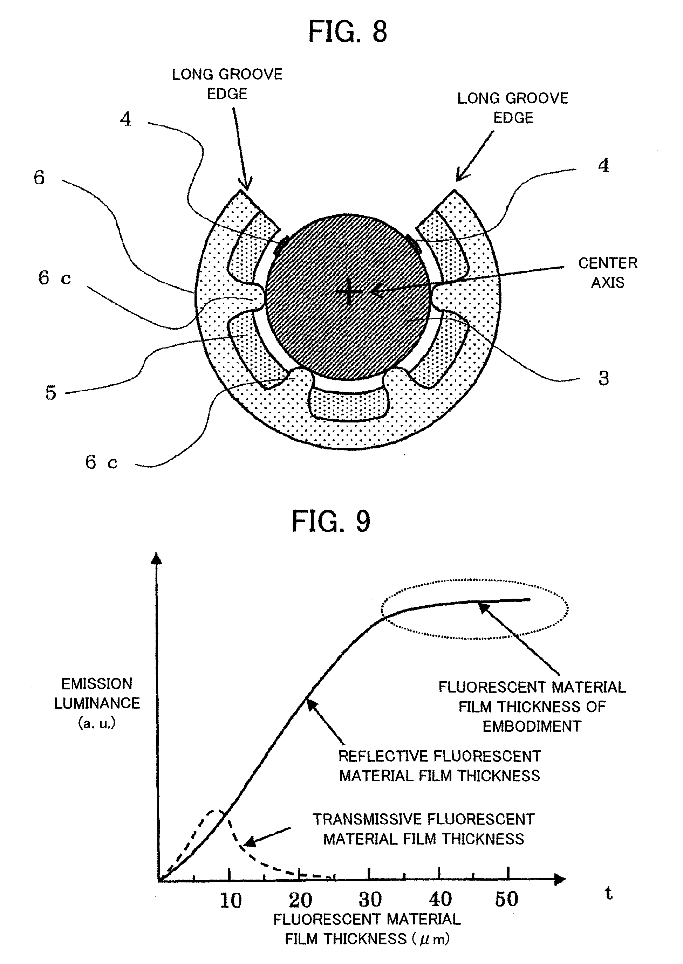

In place of the protrusions 6b, as shown in FIGS. 7 and 8, protrusions 6c having a ridge line along the long axis direction can be formed uniformly continuously in the long axis direction. For example, triangular prism or semicircular column-shaped, continuously linear protrusions 6c can be formed as a mechanism for maintaining the positional relationship between the light guide 3 and fluorescent material layer 5. In such a case, the cross-section of the casing 6 perpendicular to the long axis direction is the same in shape along the long axis direction; therefore, the casing 6 can easily be molded.

FIG. 9 is a graphical representation for explaining the relationship between the thickness of the fluorescent material and the emission luminance. In Embodiment 1, the fluorescent material layer 5 has a thickness of, for example, approximately 50 µm. As shown in FIG. 9, it is possible to improve the efficiency of conversion to produce fluorescence so as to save the energy and to prevent uneven emission intensity due to variation in thickness of the fluorescent material layer 5 by forming the fluorescent material layer 5 to a thickness with which the intensity of emission upon illumination with blue light is saturated.

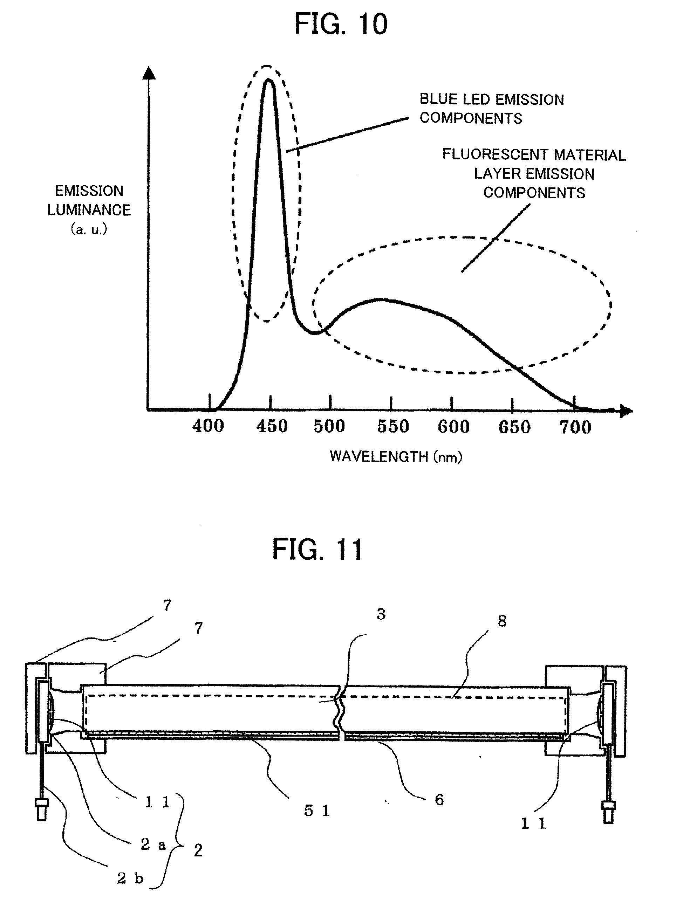

FIG. 10 is a graphical representation showing the luminance/emission property of the light source device according to Embodiment 1. In the case of FIG. 10, a peak wavelength of 450 nm or so and complex light of approximately 500 nm to 630 nm emitted by the fluorescent material are mixed to present white light.

As described above, in the light source device according to Embodiment 1, the blue light reflected by the fluorescent material layer 5 and the complex light produced by the fluorescent material layer 5 are mixed in color, transmitted within the light guide 3, and yield white illumination light to the illuminated object through the opening 6a of the casing 6.

Since the light guide 3 is cylindrical, the reflected light reflected on the surface of the fluorescent material layer 5 and the produced fluorescence are collected by the light guide 3 and with its lens effect, the effect of improving the illuminance of illumination on the illuminated object is obtained.

### Embodiment 2

Embodiment 2 utilizes an ultraviolet-emitting LED. The light source devices according to Embodiments 1 and 2 have the same basic structure except for the structure regarding the light source, fluorescent material layer, and ultraviolet shielding pattern (ultraviolet cutoff pattern, ultraviolet cutoff filter). FIG. 11 is a cross-sectional view of the light source device according to Embodiment 2 of the present disclosure when seen in the direction perpendicular to the long axis of the light guide.

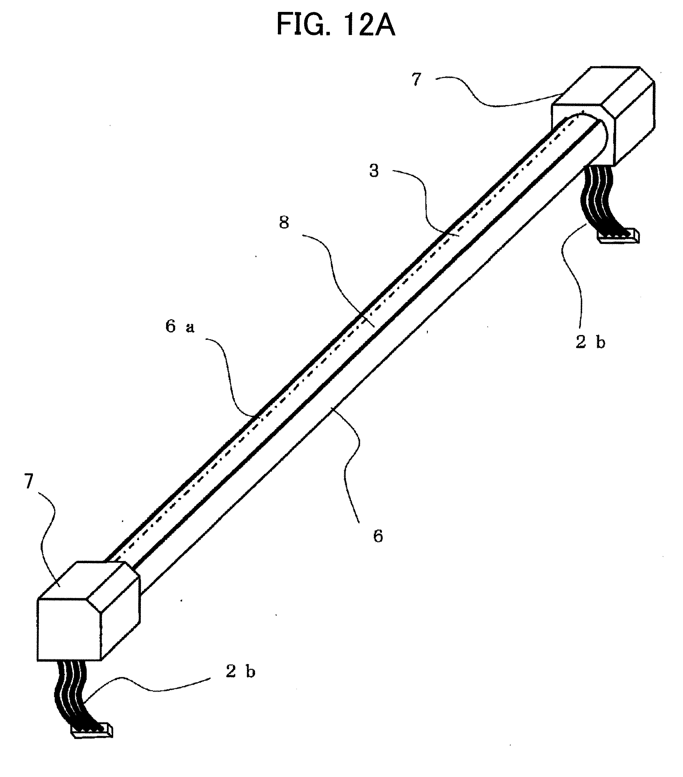

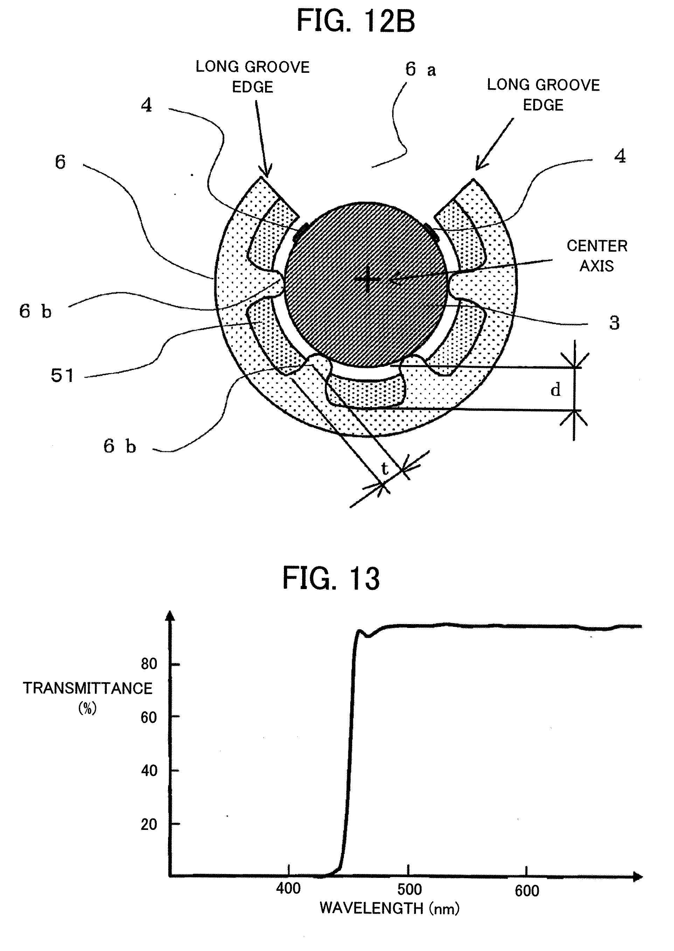

FIG. 12A is a perspective view of the light source device according to Embodiment 2. FIG. 12B is a cross-sectional view of the light source device according to Embodiment 2 when seen in the long axis direction of the light guide. In FIGS. 11 to 12B, the same reference numbers as those in FIGS. 1, 2, and 4 refer to the same or equivalent components.

A light source 11 emits light of wavelengths of approximately 350 nm to 380 nm using an ultraviolet-emitting LED. The LED circuit 2 places the light source 11 on the substrate 2a made of an epoxy resin or the like and comprises a connector 2b supplying power to the light source 11 from an external source. The light guide 3 is formed by molding a material having a refractive index (n) of 1.5 or higher such as transparent soda glass, transparent resin, or transparent sapphire having a transmittance of 80 % or so into a rod shape, and is mirror-finished at the ends.

Light from the light source 11 is introduced into the light guide 3 from the end. The ultraviolet rays (ultraviolet radiation) having entered therein is guided along the longitudinal direction (long axis direction). The path of light passing through the light guide 3 in the long axis direction is referred to as the light guide path and the path of light passing through the light guide 3 in the direction perpendicular to the long axis direction is referred to as the transversal path (transmission path).

As in Embodiment 1, a white casing 6 having a fluorescent material layer 51 applied on the inner periphery that is spaced from the outer periphery of the cylindrical (rod-shaped) light guide 3 by a given space of 0.1 mm or so is disposed to surround the light guide 3.

With a long groove of which the width perpendicular to the long axis direction is constant being formed along the long axis direction, the casing 6 has an opening 6a formed to serve as an outlet (exit region) through which the light is emitted to the illuminated object. Part of the light guide 3 is exposed in the opening 6a in the form of a long groove along the long axis direction. Part of the light guide 3 can be protruding from the opening 6a.

Linear light reflecting patterns 4 are provided along the long axis direction on the outer periphery of the light guide 3 facing the long groove edges of the opening 6a on either side thereof with a given space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 3.

As in Embodiment 1, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 3 at positions facing at least part of the fluorescent material layer 51 via the interior of the light guide 3.

Part of the ultraviolet rays passing through the light guide 33 along the light guide path is scattered or regularly reflected by the light reflecting patterns 4, transmitted within the light guide 3 along the transversal path, exits from the surface of the light guide 3 opposite to a light reflecting pattern 4, and is captured by the fluorescent material layer 5 on the casing 6. The light reflecting patterns 4 can extend beyond the long groove edges and partly or entirely extend into the opening 6a (both in the long axis direction and short axis direction).

A fluorescent material layer 51 having a thickness (t) of, for example, approximately 50 µm is applied to the inner surface of the casing 6 (the surface surrounding the outer periphery of the light guide 3). As the fluorescent material layer 51, for example, a mixture of a fluorescent material emitting red light of a wavelength of approximately 600 nm or so, a fluorescent material emitting green light of a wavelength of 525 nm or so, and a fluorescent material emitting blue light of a wavelength of 450 nm or so is applied.

The ultraviolet rays are captured by the fluorescent material layer 51, and part of the ultraviolet rays is reflected by the fluorescent material layer 51, travel through the light guide 3 crosswise, and are emitted to the illuminated object through the opening 6a.

The other ultraviolet rays are absorbed by the fluorescent material layer 51 and excited fluorescence is emitted. In other words, the fluorescent material layer 51 emits three-component complex light (mixed color light) subjected to conversion to light of wavelengths different from the ultraviolet rays.

The fluorescence emitted by the fluorescent material layer 51 travels through the light guide 3 crosswise and is emitted to the illuminated object through the opening 6a as complex light. Then, quasi-white light that is a mixture of blue, red, and green lights is emitted to the illuminated object.

The light source device according to Embodiment 2 is constructed by housing the light source 11 placed on the substrate 2a of the LED circuit 2 in the hollow of the hollowed holder 7 at one end and inserting the end of the casing 6 in which the light guide 3 is installed at the other end.

In FIG. 11, the holder 7 is provided at either end of the casing 6 and the ultraviolet rays emitted by the light sources 11 enter the light guide 3 from both ends. Needless to say, it is possible to provide the holder 7 and light source 11 only at one end of the light guide 3. The relationship between the light source 11 and holder 7 and the mechanism of the light source device are the same as those in Embodiment 1.

In Embodiment 2, an ultraviolet-shield shielding the ultraviolet rays emitted through the opening 6a is formed in order to prevent the ultraviolet rays from illuminating the illuminated object. The ultraviolet shield in Embodiment 2 is exemplified by an ultraviolet shielding pattern 8 (ultraviolet cutoff pattern, ultraviolet cutoff filter) formed on the portion of the light guide 3 at the opening 6a.

In the light source device according to Embodiment 2, the ultraviolet shielding pattern (ultraviolet cutoff filter) 8 shielding the ultraviolet rays emitted through the opening 6a of the casing 6 along the long axis direction is provided on the outer periphery of the light guide 3 between the two rows of light reflecting patterns 4. When only one row of light reflecting pattern 4 is formed on the outer periphery of the light guide 3 near one long groove edge, the ultraviolet shielding pattern (ultraviolet cutoff filter) 8 is formed on the portion between the two long groove edges.

FIG. 13 is a graphical representation showing the property of the ultraviolet cutoff filter of the light source device according to Embodiment 2. Having a cutoff wavelength around approximately 430 nm, the ultraviolet cutoff filter 8 does not transmit light of wavelengths of 430 nm and shorter and transmits light of wavelengths longer than 430 nm. The ultraviolet cutoff filter 8 is formed by applying or depositing on the light guide 3 a filter material cutting off the ultraviolet radiation.

When the ultraviolet rays reflected by the fluorescent material layer 51 or the like is unnecessary as illumination light, the ultraviolet shielding pattern (ultraviolet cutoff filter) 8 as the ultraviolet shield can be formed in the light source device. Consequently, only the visible light in the fluorescence that is transmitted through the ultraviolet cutoff filter 8 is emitted to the illuminated object.

Compared with the emission spectrum shown in FIG. 10 when a blue LED is used as described in Embodiment 1, an emission spectrum having no prominent emission luminance peak in the blue emission components can be obtained in this Embodiment 2. In other words, the light source device according to Embodiment 2 leads to illumination with a flat emission spectrum in the visible range.

In the light source device according to Embodiment 2, the ultraviolet rays exiting from the light guide 3 to the opening 6a are shielded by the ultraviolet cutoff filter 8. The complex light produced by the fluorescent material layer 51 is transmitted within the light guide 3 and yields white illumination light to the illuminated object through the opening 6a of the casing 6. As in Embodiment 1, since the light guide 3 is cylindrical, the fluorescence produced by the fluorescent material layer 51 is collected by the light guide 3 and with its lens effect, the effect of improving the illuminance of illumination on the illuminated object is obtained.

The width of the light reflecting patterns 4 (the width in the short axis direction) is not mentioned with the light source devices according to Embodiments 1 and 2. The width of the light reflecting patterns 4 can vary according to the light flux necessary for the light source device and/or the property of the light guide 3 or fluorescent material layer 5 or 51.

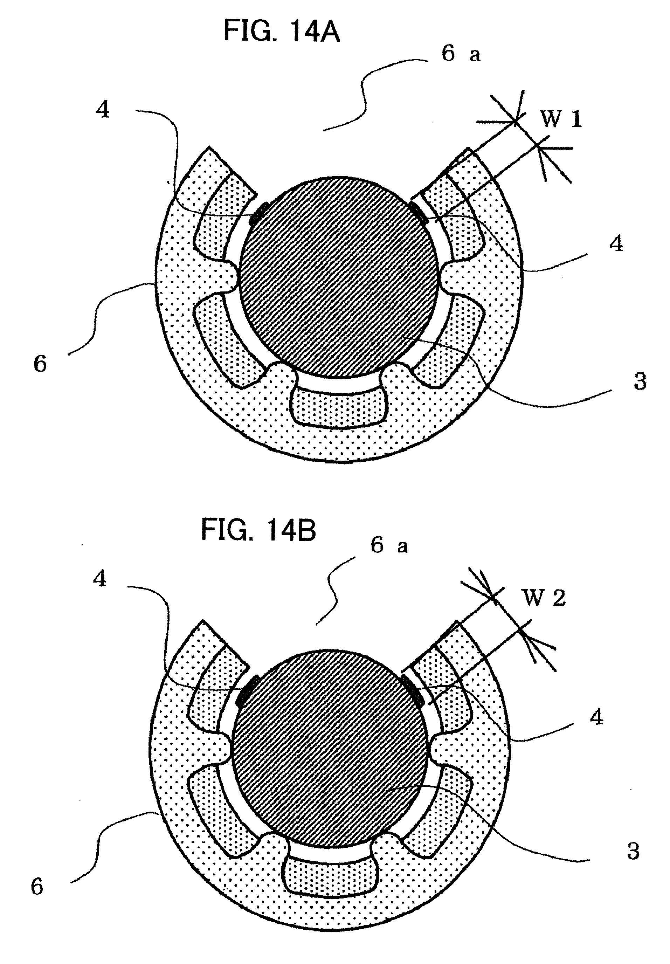

FIG. 14A is a cross-sectional view showing the width of the reflecting patterns of the light source device according to Embodiment 1 or 2. FIG. 14B is a cross-sectional view showing a different exemplary width of the reflecting patterns. The width of the light reflecting patterns 4 appropriately ranges from W1 = 0.2 mm or so shown in FIG. 14A to W2 = 0.3 mm or so shown in FIG. 14B.

In the light source devices according to Embodiments 1 and 2, the light reflecting patterns 4 are provided on the outer periphery of the light guide 3 at positions facing the ends of the opening 6a in the form of a long groove, respectively, with a space. As described above, the light reflecting patterns 4 can extend beyond the long groove edges and partly or entirely extend into the opening 6a (both in the long axis direction and short axis direction).

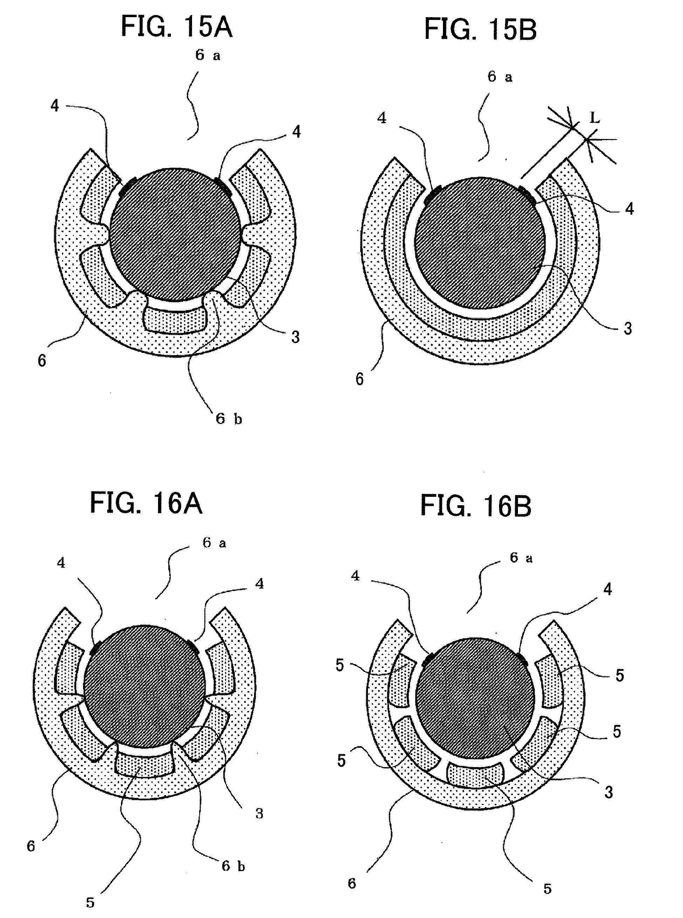

FIGS. 15A and 15B show cases in which the light reflecting patterns 4 partly extend into the opening 6a. FIG. 15A is a cross-sectional view showing the reflecting patterns at a position of the protrusions of the light source device according to Embodiment 1 or 2. FIG. 15B is a cross-sectional view showing the reflecting patterns at a midpoint position between the protrusions. Even if the light reflecting patterns 4 partly extend into the opening 6a as shown in FIGS. 15A and 15B, the same effect as described in Embodiments 1 and 2 is obtained.

### Embodiment 3

FIG. 16A is a cross-sectional view showing the fluorescent material layer at a position of the protrusions of the light source device according to Embodiment 3 of the present disclosure. FIG. 16B is a cross-sectional view showing the fluorescent material layer at a midpoint position between the protrusions of the light source device according to Embodiment 3. In Embodiment 3, multiple linear fluorescent material layers 5 (or fluorescent material layers 51) along the long axis direction, of which the width in the direction perpendicular to the long axis direction is constant, are provided.

The fluorescent material layer 5 (fluorescent material layer 51) is provided on the entire inner surface region of the casing 6 in Embodiments 1 and 2. On the other hand, the fluorescent material layer 5 is formed in stripes in Embodiment 3. A slit is provided between adjoining fluorescent material layers 5 (fluorescent material layers 51).

Additionally, at least the inner surface regions of the casing 6 where the fluorescent material layer 5 (fluorescent material layer 51) is not applied (formed) are made of a light-absorbing material such as a black material so that the light is not reflected. Absorbing the blue light with the inner surface of the casing 6 makes it possible to reduce the luminance of the blue light components shown in FIG. 10 and obtain the luminance close to that of the fluorescent material layer emission components.

In other words, applying a black plastic resin to the casing (reflecting plate) 6 makes it possible to adjust the luminance of white light emission spectrum. When there is no need of luminance adjustment, the light source device according to Embodiment 3 can be implemented using the casing 6 of which the inner surface regions are white, not black.

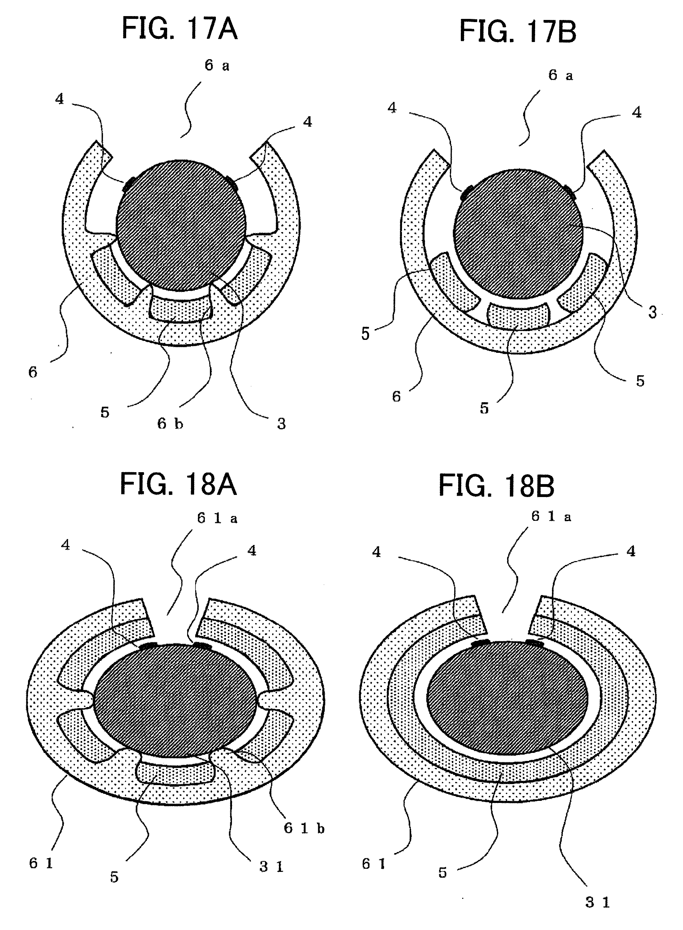

FIG. 17A is a cross-sectional view showing a different exemplary fluorescent material layer at a position of the protrusions of the light source device according to Embodiment 3. FIG. 17B is a cross-sectional view of the different example at a midpoint position between the protrusions. The fluorescent material layer is applied to the entire inner surface region of the casing 6 in Embodiments 1 and 2.

However, as shown in FIG. 17, the fluorescent material layer 5 does not need to be applied to the entire inner surface region of the casing 6. For example, three lines or so of fluorescent material layers 5 having a width of 2 mm are provided around the region of the casing 6 opposite to the opening 6a.

Furthermore, using a black casing 6, the luminance of blue light components can be reduced. When there is no need of luminance adjustment using such a method, the light source device according to Embodiment 3 can be implemented using the casing 6 of which the inner surface regions are white, not black.

### Embodiment 4

FIG. 18A is a cross-sectional view showing a position of the protrusions of the light source device according to Embodiment 4 of the present disclosure. FIG. 18B is a cross-sectional view showing a midpoint position between the protrusions of the light source device according to Embodiment 4. Embodiment 4 utilizes a light guide 31 that is elliptical in cross-section perpendicular to the long axis. A casing 61 is virtually elliptical in cross-section perpendicular to the long axis in accordance with the light guide 31.

A white casing 61 on the inner periphery of which a fluorescent material is applied is disposed to surround the light guide 31 with a given space of 0.1 mm or so from the outer periphery of the rod-shaped light guide 31 that is elliptical in cross-section perpendicular to the long axis. The other structure is the same as that in Embodiment 1.

With a long groove of which the width perpendicular to the long axis direction is constant being formed along the long axis direction, the casing 61 has an opening 61 a formed to serve as an outlet (exit region) through which the light is emitted to the illuminated object. The casing 61 surrounds the outer periphery of the light guide 31 except for the strip-shaped opening 61a formed along the long axis direction of the light guide 31.

Part of the light guide 31 is exposed in the opening 61 a in the form of a long groove along the long axis direction. Part of the light guide 31 can be protruding from the opening 61 a. The edges of the opening 61 a along the long axis direction (which correspond to the ends of the casing 61 or the casing 61 and fluorescent material layer 5 along the long axis direction) are called the long groove edges.

Linear light reflecting patterns 4 are provided along the long axis direction on the outer periphery of the light guide 31 facing the long groove edges of the opening 61 a on either side thereof with a given space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 31.

In the embodiment of FIG. 18, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 31 at positions facing at least part of the fluorescent material layer 5 via the interior of the light guide 31.

Part of the blue light passing through the light guide 31 along the light guide path is scattered or regularly reflected by the light reflecting patterns 4, transmitted within the light guide 31 along the transversal path, exits from the surface of the light guide 31 opposite to a light reflecting pattern 4, and is captured by the fluorescent material layer 5 on the casing 61. The light reflecting patterns 4 can extend beyond the long groove edges and partly or entirely extend into the opening 61 a (both in the long axis direction and short axis direction).

A fluorescent material layer 5 having a thickness of, for example, approximately 50 µm is applied to the inner surface of the casing 61 (the surface surrounding the outer periphery of the light guide 31). As the fluorescent material layer 51, for example, a mixture of a fluorescent material emitting red light of a wavelength of approximately 600 nm or so and a fluorescent material emitting green light of a wavelength of 525 nm or so is applied.

The blue light is captured by the fluorescent material layer 5, and part of the blue light is reflected by the fluorescent material layer 5, travels through the light guide 31 crosswise, and is emitted to the illuminated object through the opening 61 a. The other blue light is absorbed by the fluorescent material layer 5 and excited fluorescence is emitted. In other words, the fluorescent material layer 5 emits two-component complex light (mixed color light) subjected to conversion to light of wavelengths different from the blue light.

The fluorescence emitted by the fluorescent material layer 5 travels through the light guide 31 crosswise and is emitted to the illuminated object through the opening 61a as complex light. Then, quasi-white light that is a mixture of blue, red, and green lights is emitted to the illuminated object. Incidentally, the relationship between the light source 1 and holder 7 and the mechanism of the light source device are the same as those in Embodiment 1.

As described above, in the light source device according to Embodiment 4, the blue light reflected by the fluorescent material layer 5 and the complex light produced by the fluorescent material layer 5 are mixed in color, transmitted within the light guide 31, and yield white illumination light to the illuminated object through the opening 61a of the casing 61.

Since the light guide 31 has an elliptical cross-section, the reflected light reflected on the surface of the fluorescent material layer 5 and the produced fluorescence are collected by the light guide 31 and with its lens effect, the effect of improving the illuminance of illumination on the illuminated object is obtained. Furthermore, advantageously, facing the elliptical end face, many LEDs can be mounted.

The light source device according to Embodiment 4 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 31.

In such a case, the ultraviolet rays reaching the opening 61 a are shielded by the ultraviolet shielding pattern 8, and the complex light produced by the fluorescent material layer 51 is transmitted within the light guide 31 and yields white illumination light to the illuminated object through the opening 61 a of the casing 61. In other words, the fluorescent material layer 51 produces three-component complex light (mixed color light) subjected to conversion to light of wavelengths different from the ultraviolet rays.

### Embodiment 5

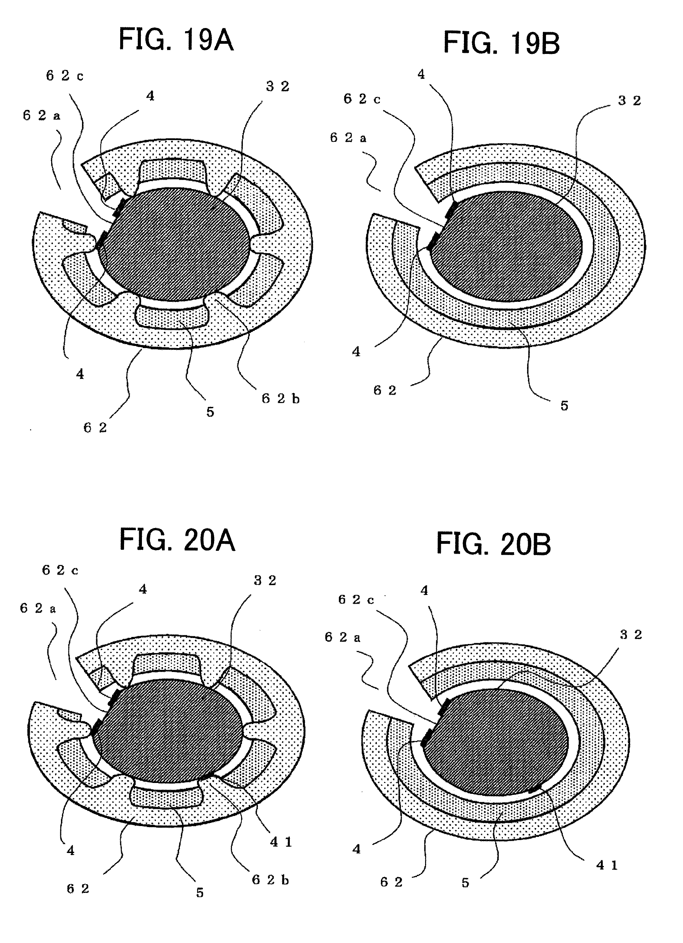

FIG. 19A is a cross-sectional view showing a position of the protrusions of the light source device according to Embodiment 5 of the present disclosure. FIG. 19B is a cross-sectional view showing a midpoint position between the protrusions of the light source device according to Embodiment 5. Embodiment 5 utilizes a light guide 32 that is shaped in cross section perpendicular to the long axis into an ellipse on part of which a cutaway portion 62c is formed.

As shown in FIGS. 19A and 19B, light reflecting patterns 4 are provided along the long axis direction on either side of and in contact with the sides along the long axis direction of the cutaway portion 62c of the light guide 32. A white casing 62 on the inner periphery of which the fluorescent material layer 5 is applied is disposed to surround the light guide 32 with a given space of 0.1 mm or so from the outer periphery of the light guide 32 excluding the cutaway portion 62c. The other structure is the same as that of Embodiment 1.

With a long groove of which the width perpendicular to the long axis direction is constant being formed along the long axis direction, the casing 62 has an opening 62a formed to serve as an outlet (exit region) through which the light is emitted to the illuminated object. The casing 62 surrounds the outer periphery of the light guide 32 except for the strip-shaped opening 62a formed along the long axis direction.

Part of the light guide 32 is exposed in the opening 62a in the form of a long groove along the long axis direction. Part of the light guide 32 can be protruding from the opening 62a. The edges of the opening 62a along the long axis direction (which correspond to the ends of the casing 62 or the casing 62 and fluorescent material layer 5 along the long axis direction) are called the long groove edges.

Linear light reflecting patterns 4 are provided along the long axis direction on the outer periphery of the light guide 32 facing the long groove edges of the opening 62a on either side thereof with a given space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 32.

In Embodiment 5, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 32 at positions facing at least part of the fluorescent material layer 5 via the interior of the light guide 32.

Part of the blue light passing through the light guide 32 along the light guide path is scattered or regularly reflected by the light reflecting patterns 4, transmitted within the light guide 32 along the transversal path, exits from the surface of the light guide 32 opposite to a light reflecting pattern 4, and is captured by the fluorescent material layer 5 on the casing 62. The light reflecting patterns 4 can extend beyond the long groove edges and partly or entirely extend into the opening 62a (both in the long axis direction and short axis direction).

A fluorescent material layer 5 having a thickness of, for example, approximately 50 µm is applied to the inner surface of the casing 62 (the surface surrounding the outer periphery of the light guide 32). As the fluorescent material layer 5, for example, a mixture of a fluorescent material emitting red light of a wavelength of approximately 600 nm or so and a fluorescent material emitting green light of a wavelength of 525 nm or so is applied.

The blue light is captured by the fluorescent material layer 5, and part of the blue light is reflected by the fluorescent material layer 5, travels through the light guide 32 crosswise, and is emitted to the illuminated object through the opening 62a. The other blue light is absorbed by the fluorescent material layer 5 and excited fluorescence is emitted. In other words, the fluorescent material layer 5 emits two-component complex light (mixed color light) subjected to conversion to light of wavelengths different from the blue light.

The fluorescence emitted by the fluorescent material layer 5 travels through the light guide 32 crosswise and is emitted to the illuminated object through the opening 62a as complex light. Then, quasi-white light that is a mixture of blue, red, and green lights is emitted to the illuminated object. Incidentally, the relationship between the light source 1 and holder 7 and the mechanism of the light source device are the same as those in Embodiment 1.

As described above, in the light source device according to Embodiment 5, the blue light reflected by the fluorescent material layer 5 and the complex light produced by the fluorescent material layer 5 are mixed in color, transmitted within the light guide 32, and yield white illumination light to the illuminated object through the opening 62a of the casing 62.

Since the light guide 32 has an elliptical cross-section, the reflected light reflected on the surface of the fluorescent material layer 5 and the produced fluorescence are collected by the light guide 32 and with its lens effect, the effect of improving the illuminance of illumination on the illuminated object is obtained. Furthermore, advantageously, facing the elliptical end face, many LEDs can be mounted.

FIG. 20A is a cross-sectional view showing a position of the protrusions of the light source device according to a modified embodiment of Embodiment 5. FIG. 20B is a cross-sectional view showing a midpoint position between the protrusions of the light source device according to the modified embodiment. The amount of illuminating blue light exiting from the opening 62a can be increased by, as shown in FIGS. 20A and 20B, adding a light reflecting pattern 41 on the outer periphery of the light guide 32 opposite to the light reflecting patterns 4 provided on the light guide 32 near the opening 62a.

Furthermore, the amount of exiting blue light can be adjusted by changing the position of the light reflecting pattern 41 provided on the outer periphery of the light guide 32. The light reflecting pattern 41 is linear along the long axis direction on the outer periphery of the light guide 32 at a position facing at least part of the fluorescent material layer 5 via the interior of the light guide 32.

The light source device according to Embodiment 5 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 32.

In such a case, the ultraviolet rays reaching the opening 62a are shielded by the ultraviolet shielding pattern 8, and the complex light produced by the fluorescent material layer 51 is transmitted within the light guide 32 and yields white illumination light to the illuminated object through the opening 62a of the casing 62. In other words, the fluorescent material layer 51 produces three-component complex light (mixed color light) subjected to conversion to light of wavelengths different from the ultraviolet rays.

### Embodiment 6

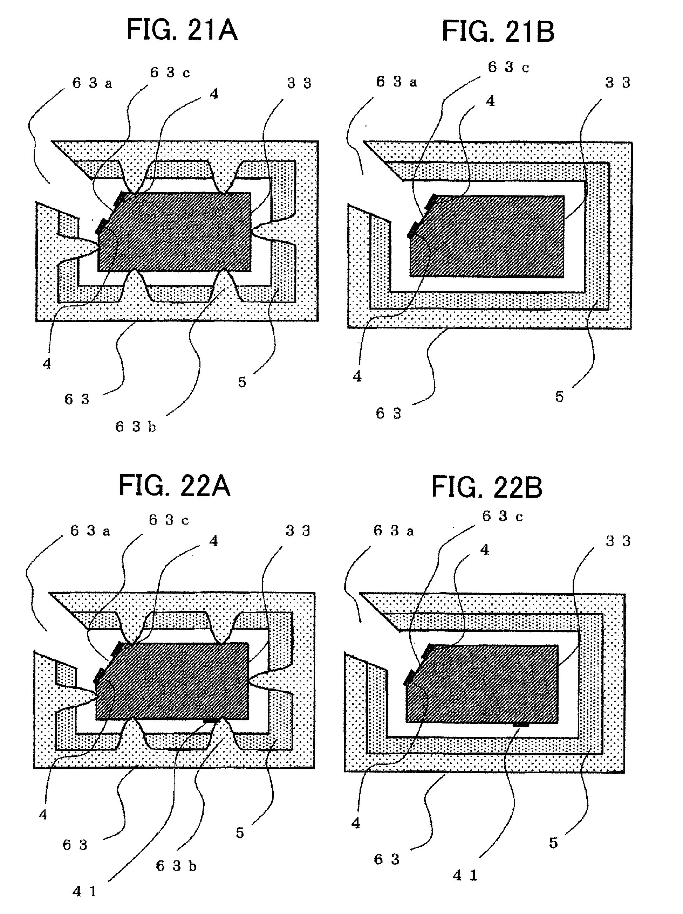

FIG. 21A is a cross-sectional view showing a position of the protrusions of the light source device according to Embodiment 6 of the present disclosure. FIG. 21B is a cross-sectional view showing a midpoint position between the protrusions of the light source device according to Embodiment 6. Embodiment 6 utilizes a light guide 33 that is shaped in cross-section perpendicular to the long axis into a rectangle on part of which a cutaway portion 63c is formed (pentagonal).

As shown in FIGS. 21A and 21B, light reflecting patterns 4 are provided along the long axis direction on either side of and in contact with the sides along the long axis direction of the cutaway portion 63c of the light guide 33. A white casing 63 on the inner periphery of which the fluorescent material layer 5 is applied is disposed to surround the light guide 33 with a given space of 0.1 mm or so from the outer periphery of the light guide 33 excluding the cutaway portion 63c. The other structure is the same as that of Embodiment 1.

With a long groove of which the width perpendicular to the long axis direction is constant being formed along the long axis direction, the casing 63 has an opening 63a formed to serve as an outlet (exit region) through which the light is emitted to the illuminated object. The casing 63 surrounds the outer periphery of the light guide 33 except for the strip-shaped opening 63a formed along the long axis direction.

Part of the light guide 33 is exposed in the opening 63a in the form of a long groove along the long axis direction. Part of the light guide 33 can be protruding from the opening 63a. The edges of the opening 63a along the long axis direction (which correspond to the ends of the casing 63 or the casing 63 and fluorescent material layer 5 along the long axis direction) are called the long groove edges.

Linear light reflecting patterns 4 are provided along the long axis direction on the outer periphery of the light guide 33 facing the long groove edges of the opening 63a on either side thereof with a given space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 33.

Also in Embodiment 6, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 33 at positions facing at least part of the fluorescent material layer 5 via the interior of the light guide 33.

Part of the blue light passing through the light guide 33 along the light guide path is scattered or regularly reflected by the light reflecting patterns 4, transmitted within the light guide 33 along the transversal path, exits from the surface of the light guide 33 opposite to a light reflecting pattern 4, and is captured by the fluorescent material layer 5 on the casing 63. The light reflecting patterns 4 can extend beyond the long groove edges and partly or entirely extend into the opening 63a (both in the long axis direction and short axis direction).

A fluorescent material layer 5 having a thickness of, for example, approximately 50 µm is applied to the inner surface of the casing 63 (the surface surrounding the outer periphery of the light guide 33). As the fluorescent material layer 5, for example, a mixture of a fluorescent material emitting red light of a wavelength of approximately 600 nm or so and a fluorescent material emitting green light of a wavelength of 525 nm or so is applied.

The blue light is captured by the fluorescent material layer 5, and part of the blue light is reflected by the fluorescent material layer 5, travels through the light guide 33 crosswise, and is emitted to the illuminated object through the opening 63a. The other blue light is absorbed by the fluorescent material layer 5 and excited fluorescence is emitted. In other words, the fluorescent material layer 5 emits two-component complex light (mixed color light) subjected to conversion to light of wavelengths different from the blue light.

The fluorescence emitted by the fluorescent material layer 5 travels through the light guide 33 crosswise and is emitted to the illuminated object through the opening 63a as complex light. Then, quasi-white light that is a mixture of blue, red, and green lights is emitted to the illuminated object. Incidentally, the relationship between the light source 1 and holder 7 and the mechanism of the light source device are the same as those in Embodiment 1.

As described above, in the light source device according to Embodiment 6, the blue light reflected by the fluorescent material layer 5 and the complex light produced by the fluorescent material layer 5 are mixed in color, transmitted within the light guide 33, and yield white illumination light to the illuminated object through the opening 63a of the casing 63. In Embodiment 6, the cutaway portion 63c of the light guide 33 serves as the light exit surface.

FIG. 22A is a cross-sectional view showing a position of the protrusions of the light source device according to a modified embodiment of Embodiment 6. FIG. 22B is a cross-sectional view showing a midpoint position between the protrusions of the light source device according to the modified embodiment. The amount of illuminating blue light exiting from the opening 63a can be increased by, as shown in FIGS. 22A and 22B, adding a light reflecting pattern 41 on the outer periphery of the light guide 33 opposite to the light reflecting patterns 4 provided on the light guide 33 near the opening 63 a.

Furthermore, the amount of exiting blue light can be adjusted by changing the position of the light reflecting pattern 41 provided on the outer periphery of the light guide 33. The light reflecting pattern 41 is linear along the long axis direction on the outer periphery of the light guide 33 at a position facing at least part of the fluorescent material layer 5 via the interior of the light guide 33.

The light source device according to Embodiment 6 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 33.

In such a case, the ultraviolet rays reaching the opening 63a are shielded by the ultraviolet shielding pattern 8, and the complex light produced by the fluorescent material layer 51 is transmitted within the light guide 33 and yields white illumination light to the illuminated object through the opening 63a of the casing 63. In other words, the fluorescent material layer 51 produces three-component complex light (mixed color light) subjected to conversion to light of wavelengths different from the ultraviolet rays.

### Embodiment 7

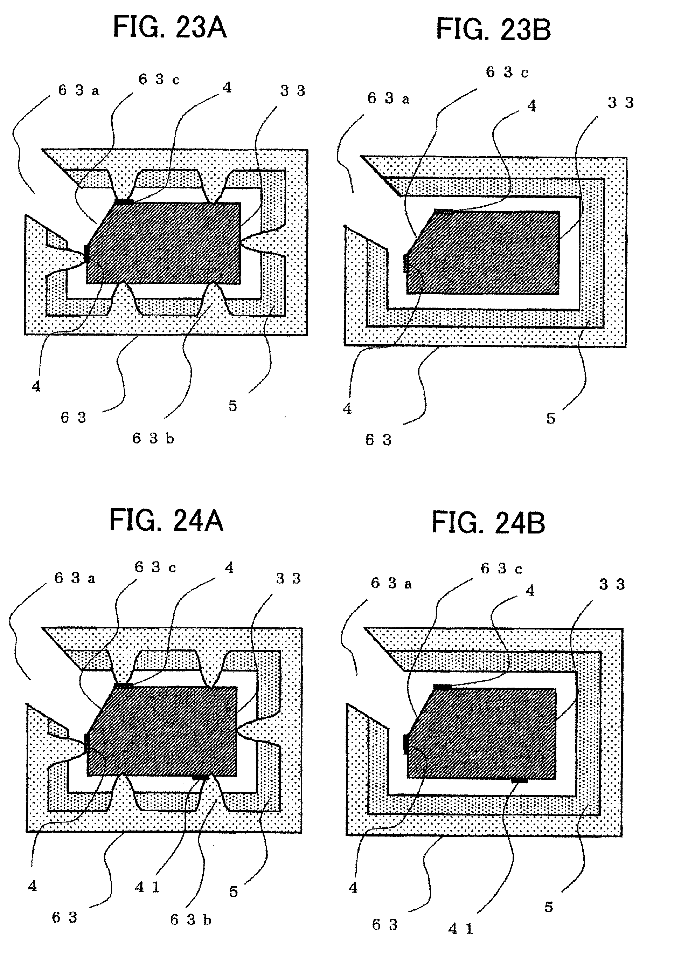

FIG. 23A is a cross-sectional view showing a position of the protrusions of the light source device according to Embodiment 7 of the present disclosure. FIG. 23B is a cross-sectional view showing a midpoint position between the protrusions of the light source device according to Embodiment 7. In Embodiment 7, the cutaway portion 63c is formed on the light guide 33 as in Embodiment 6; however, the light reflecting patterns 4 are provided on the surface of the light guide 33 other than the cutaway portion 63c.

As shown in FIGS. 23A and 23B, light reflecting patterns 4 are provided along the long axis direction outside the cutaway portion 63c and border on the sides along the long axis direction of the cutaway portion 63c of the light guide 33.

A white casing 63 on the inner periphery of which the fluorescent material layer 5 is applied is disposed to surround the light guide 33 with a given space of 0.1 mm or so from the outer periphery of the light guide 33 excluding the cutaway portion 63c. The other structure is the same as that of Embodiment 1.

With a long groove of which the width perpendicular to the long axis direction is constant being formed along the long axis direction, the casing 63 has an opening 63a formed to serve as an outlet (exit region) through which the light is emitted to the illuminated object. The casing 63 surrounds the outer periphery of the light guide 33 except for the strip-shaped opening 63a formed along the long axis direction.

Part of the light guide 33 is exposed in the opening 63a in the form of a long groove along the long axis direction. Part of the light guide 33 can be protruding from the opening 63a. The edges of the opening 63a along the long axis direction are called the long groove edges.

Linear light reflecting patterns 4 are provided along the long axis direction in the vicinity of the cutaway portion 63c on the sides of the light guide 33 adjoining the cutaway potion 63c on the outer periphery of the light guide 33 facing the long groove edges of the opening 63a on either side thereof with a space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 33.

Also in Embodiment 7, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 33 at positions facing at least part of the fluorescent material layer 5 via the interior of the light guide 33.

Part of the blue light passing through the light guide 33 along the light guide path is scattered or regularly reflected by the light reflecting patterns 4, transmitted within the light guide 31 along the transversal path, exits from the surface of the light guide 33 opposite to a light reflecting pattern 4, and is captured by the fluorescent material layer 5 on the casing 63. The light reflecting patterns 4 can extend beyond the long groove edges and partly or entirely extend into the opening 63a (both in the long axis direction and short axis direction).

A fluorescent material layer 5 having a thickness of, for example, approximately 50 µm is applied to the inner surface of the casing 63 (the surface surrounding the outer periphery of the light guide 33). As the fluorescent material layer 5, for example, a mixture of a fluorescent material emitting red light of a wavelength of approximately 600 nm or so and a fluorescent material emitting green light of a wavelength of 525 nm or so is applied.

The blue light is captured by the fluorescent material layer 5, and part of the blue light is reflected by the fluorescent material layer 5, travels through the light guide 31 crosswise, and is emitted to the illuminated object through the opening 63a. The other blue light is absorbed by the fluorescent material layer 5 and excited fluorescence is emitted. In other words, the fluorescent material layer 5 emits two-component complex light (mixed color light) subjected to conversion to light of wavelengths different from the blue light.

The fluorescence emitted by the fluorescent material layer 5 travels through the light guide 33 crosswise and is emitted to the illuminated object through the opening 63a as complex light. Then, quasi-white light that is a mixture of blue, red, and green lights is emitted to the illuminated object. Incidentally, the relationship between the light source 1 and holder 7 and the mechanism of the light source device are the same as those in Embodiment 1.

As described above, in the light source device according to Embodiment 7, the blue light reflected by the fluorescent material layer 5 and the complex light produced by the fluorescent material layer 5 are mixed in color, transmitted within the light guide 33, and yield white illumination light to the illuminated object through the opening 63a of the casing 63.

In Embodiment 7, the cutaway portion 63c of the light guide 33 serves as the light exit surface. The blue light transmitted through the light reflecting patterns 4 and leaking into the opening 63a can be reduced and the area of the exit region for the light to exit from the cutaway portion 63c of the light guide 33 can be increased.

FIG. 24A is a cross-sectional view showing a position of the protrusions of the light source device according to a modified embodiment of Embodiment 7. FIG. 24B is a cross-sectional view showing a midpoint position between the protrusions of the light source device according to the modified embodiment. The amount of illuminating blue light exiting from the opening 63a can be increased by, as shown in FIGS. 24A and 24B, adding a light reflecting pattern 41 on the outer periphery of the light guide 33 opposite to the light reflecting patterns 4 provided on the light guide 33 near the opening 63a.

Furthermore, the amount of exiting blue light can be adjusted by changing the position of the light reflecting pattern 41 provided on the outer periphery of the light guide 33. The light reflecting pattern 41 is linear along the long axis direction on the outer periphery of the light guide 32 at a position facing at least part of the fluorescent material layer 5 via the interior of the light guide 33.

The light source device according to Embodiment 7 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 33.

In such a case, the ultraviolet rays reaching the opening 63a are shielded by the ultraviolet shielding pattern 8, and the complex light produced by the fluorescent material layer 51 is transmitted within the light guide 33 and yields white illumination light to the illuminated object through the opening 63a of the casing 63. In other words, the fluorescent material layer 51 produces three-component complex light (mixed color light) subjected to conversion to light of wavelengths different from the ultraviolet rays.

### Embodiment 8

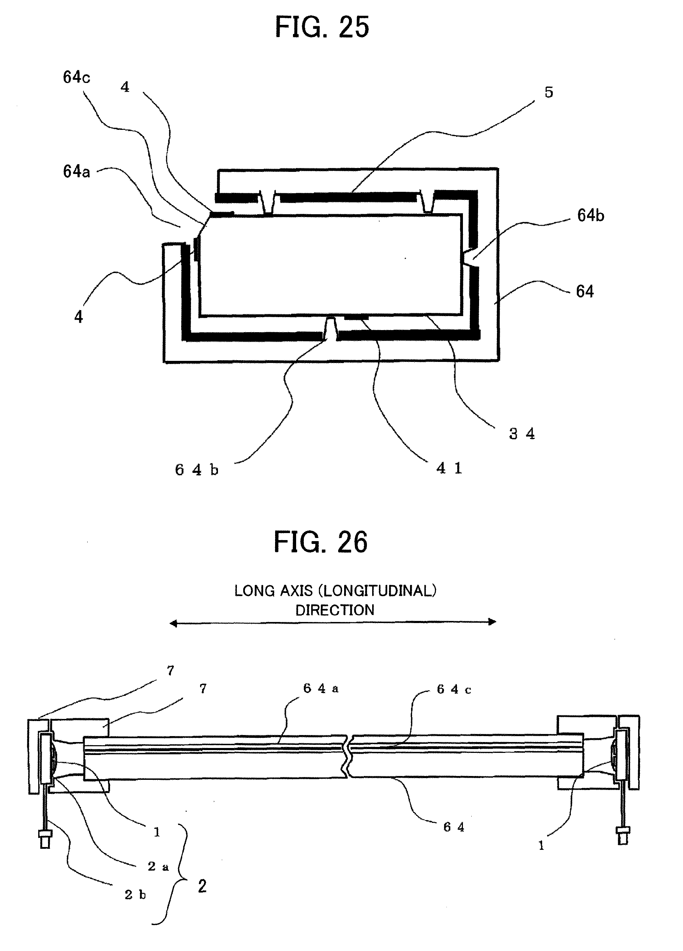

FIG. 25 is a cross-sectional view of the vicinity of the center of the light source device according to Embodiment 8 of the present disclosure. FIG. 26 is a cross-sectional view of the light source device according to Embodiment 8 when seen in the direction perpendicular to the long axis.

Embodiment 8 utilizes a light guide 34 having a rectangular cross-section at a corner of which a cutaway portion 64c is formed as in Embodiments 6 and 7; however, the cutaway portion 64c is smaller in width than the cutaway portion 63c and formed by so-called beveling. Furthermore, the light source device according to Embodiment 8 exemplifies a case in which protrusions 64b are formed continuously in the long axis direction.

As shown in FIG 25, light reflecting patterns 4 are provided along the long axis direction outside the cutaway portion 64c and border on the sides along the long axis direction of the cutaway portion 64c of the light guide 34. A white casing 64 on the inner periphery of which the fluorescent material layer 5 is applied is disposed to surround the light guide 34 with a given space of 0.1 mm or so from the outer periphery of the light guide 34 excluding the cutaway portion 64c. The other structure is the same as that of Embodiment 1.

With a long groove of which the width perpendicular to the long axis direction is constant being formed along the long axis direction, the casing 64 has an opening 64a formed to serve as an outlet (exit region) through which the light is emitted to the illuminated object.

The casing 64 surrounds the outer periphery of the light guide 34 except for the strip-shaped opening 64a formed along the long axis direction. Part of the light guide 34 is exposed in the opening 64a in the form of a long groove along the long axis direction. Part of the light guide 34 can be protruding from the opening 64a. The edges of the opening 64a along the long axis direction are called the long groove edges.

Linear light reflecting patterns 4 are provided along the long axis direction in the vicinity of the cutaway portion 64c on the sides of the light guide 34 adjoining the cutaway potion 64c on the outer periphery of the light guide 34 facing the long groove edges of the opening 63a on either side thereof with a space. The term "linear" means that the light reflecting patterns 4 are overall continuous in the long axis direction including those intermittent or variable in pitch along the long axis direction. The light reflecting patterns 4 are formed, for example, using a white light reflecting member applied by silk printing or a lenticular lens or prism pattern formed by directly grooving the light guide 34.

Also in Embodiment 8, two rows of light reflecting patterns 4 (light guide reflecting patterns, light scattering patterns) are formed in parallel to each other along the long axis direction. It is possible to provide a single row of light reflecting pattern 4 along the long axis direction. The light reflecting patterns 4 are provided along the long axis direction on the outer periphery of the light guide 34 at positions facing at least part of the fluorescent material layer 5 via the interior of the light guide 34.

Part of the blue light passing through the light guide 34 along the light guide path is scattered or regularly reflected by the light reflecting patterns 4, transmitted within the light guide 34 along the transversal path, exits from the surface of the light guide 34 opposite to a light reflecting pattern 4, and is captured by the fluorescent material layer 5 on the casing 64. The light reflecting patterns 4 can extend beyond the long groove edges and partly or entirely extend into the opening 64a (both in the long axis direction and short axis direction).

A fluorescent material layer 5 having a thickness of, for example, approximately 50 µm is applied to the inner surface of the casing 64 (the surface surrounding the outer periphery of the light guide 34). As the fluorescent material layer 5, for example, a mixture of a fluorescent material emitting red light of a wavelength of approximately 600 nm or so and a fluorescent material emitting green light of a wavelength of 525 nm or so is applied.

The blue light is captured by the fluorescent material layer 5, and part of the blue light is reflected by the fluorescent material layer 5, travels through the light guide 34 crosswise, and is emitted to the illuminated object through the opening 64a. The other blue light is absorbed by the fluorescent material layer 5 and excited fluorescence is emitted. In other words, the fluorescent material layer 5 emits two-component complex light (mixed color light) subjected to conversion to light of wavelengths different from the blue light.

The fluorescence emitted by the fluorescent material layer 5 travels through the light guide 34 crosswise and is emitted to the illuminated object through the opening 64a as complex light. Then, quasi-white light that is a mixture of blue, red, and green lights is emitted to the illuminated object. Incidentally, the relationship between the light source 1 and holder 7 and the mechanism of the light source device are the same as those in Embodiment 1.

As described above, in the light source device according to Embodiment 8, the blue light reflected by the fluorescent material layer 5 and the complex light produced by the fluorescent material layer 5 are mixed in color, transmitted within the light guide 34, and yield white illumination light to the illuminated object through the opening 64a of the casing 64.

In Embodiment 8, the beveled cutaway portion 64c of the light guide 34 serves as the light exit surface. In Embodiment 8, the white light is emitted to the illuminated object from the beveled portion (cutaway portion) 64c of the light guide 34 in a concentrated manner, whereby advantageously, a line light source having high illumination luminance can be obtained.

Although not shown, a linear light reflecting pattern 41 can be provided along the long axis direction on the outer periphery of the light guide 34 at a position facing at least part of the fluorescent material layer 5 via the interior of the light guide 34 as in Embodiment 6 or 7.

In the light source devices according to Embodiments 3 to 8, the structure using the light source 1 emitting blue light is mainly described. As described above, the same applies to the relationship between the light source 11 and holder 7 and the mechanism of the light source device in the structure using the light source 11 emitting ultraviolet rays described in Embodiment 2.

The light source device according to Embodiment 8 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 34.

In such a case, the ultraviolet rays reaching the opening 64a are shielded by the ultraviolet shielding pattern 8, and the complex light produced by the fluorescent material layer 51 is transmitted within the light guide 34 and yields white illumination light to the illuminated object through the opening 64a of the casing 64. In other words, the fluorescent material layer 51 produces three-component complex light (mixed color light) subjected to conversion to light of wavelengths different from the ultraviolet rays.

Incidentally, in Embodiments 1 to 8, the fluorescent material layer 5 or 51 is made of a mixture of fluorescent materials. It is possible to divide the fluorescent material layer 5 or 51 and make each fluorescent material layer 5 or 51 emit a single color light. The fluorescent materials are described mainly with regard to red, green, and blue light emission. The emission color is not limited to those. Orange or yellow-green light-emitting fluorescent materials can be used to construct the light source device.

### Embodiment 9

In the light source devices according to Embodiments 1 to 8, the fluorescent material layer 5 or 51 is interposed between the surface of the casing 6, 61 to 64 that surrounds the light guide 3, 31 to 34 and the outer periphery of the light guide 3, 31 to 34. In the light source device according to Embodiment 9, the fluorescent material layer 5 or 51 is formed on the surface of the casing 6, 61 to 64 covering the rod-shaped light guide 3, 31 to 34 that is opposite to the surface surrounding the light guide 3, 31 to 34.

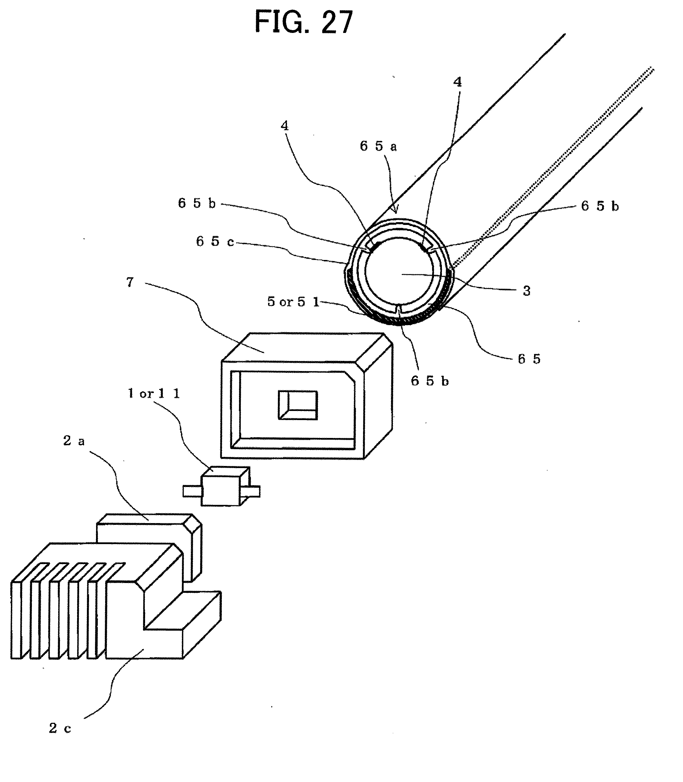

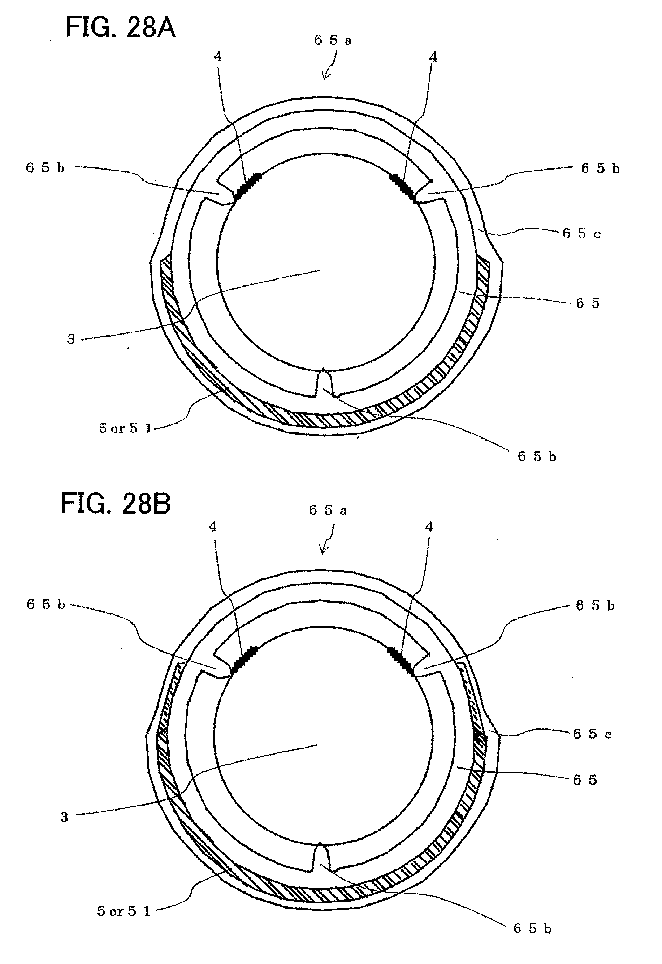

FIG. 27 is an exploded, perspective view of the vicinity of the holder of the light source device according to Embodiment 9 of the present disclosure. FIG. 28A is a cross-sectional view of the light guide portion of the light source device according to Embodiment 9. Incidentally, Embodiment 9 is described using the cylindrical light guide 3 by way of example. Needless to say, the light guides 31 to 34 having an elliptical or polygonal cross-section can be used.

As shown in FIGS. 27 and 28A, a transparent casing 65 (outer shell pipe 65) surrounds the outer periphery of the light guide 3. The fluorescent material layer 5 is formed on the surface of the transparent casing 65 opposite to the surface surrounding the light guide 3. In other words, the fluorescent material layer 5 is formed on the outer periphery of the transparent casing 65. The fluorescent material layer 5 is separated from the light guide 3 by the transparent casing 65.

However, the fluorescent material layer 5 surrounds the outer periphery of the light guide 3 except for an opening 65a that is continuous along the long axis direction, and exposes or protrudes part of the light guide 3 in the opening 65a. The opening 65a is an opening of the above-described fluorescent material layer 5 (fluorescent material layer 51) that surrounds the light guide 3 and is in the form of a long groove along the long axis direction. The opening 65a formed by the fluorescent material layer 5 (fluorescent material layer 51) can be narrowed by positioning the light reflecting patterns 4 formed on the light guide 3.

The portion of the transparent casing 65 facing the opening 65a can be an open area (opening) in the form of a long groove along the long axis direction. In other words, the transparent casing 65 can have the same shape as the casing 6 (61 to 64) or can be a hollowed cylinder housing the light guide 3 as shown in the figures.

Protrusions 65b in FIGS. 27 and 28A are formed on the surface of the transparent casing 65 that surrounds the light guide 3, and make contact with the outer periphery of the light guide 3, whereby the transparent casing 65 supports the light guide 3. The protrusions 65b can be so shaped that they are provided at both ends and the center of the casing like the protrusions 6b in FIG. 3 or they are provided uniformly continuously in the long axis direction as shown in FIGS. 7 and 8.

The protrusions 65b are so shaped that they are formed on the inner surface of the transparent casing 65 at given intervals in the long axis direction. However, triangular prism or semicircular column-shaped linear protrusions 6c can be formed continuously in the long axis direction of the transparent casing 65.

In FIGS. 27 and 28A, a protective sheet 65c (outermost shell pipe 65c) surrounds and protects the transparent casing 65 and the fluorescent material layer 5 (fluorescent material later 51) formed on the outer periphery of the transparent casing 65. The protective sheet 65c can be a hollowed cylinder housing the transparent casing 65 and fluorescent material layer 5 (fluorescent material layer 51) and the light guide 3. Incidentally, the light source device according to Embodiment 9 can eliminate the protective sheet 65c.

The mechanism of the light source device according to Embodiment 9 will be described hereafter. Light emitted by the light source 1 (light source 11) enters the light guide 3 from the end and is propagated in the light guide 3. In the course of the propagation, the light is scattered or regularly reflected by the light reflecting patterns 4 and exits from the outer periphery of the light guide 3.

The fluorescent material layer 5 captures the light exiting from the light guide 3 via the transparent casing 65. The fluorescent material layer 5 reflects the captured light and emits multi-color complex light (mixed color light) subjected to conversion to light of optical wavelengths different from the light from the light source 1 (light source 11).

The light emitted from the fluorescent material layer 5 is transmitted into the light guide 3 via the transparent casing 65, and exits from the portion of the light guide 3 that is exposed or protruding in the opening 65a of the fluorescent material layer 5. Then, complex light (mixed color light) of the fluorescence and blue light is emitted to the illuminated object such as an original copy placed to face the opening 65a.

The light source device according to Embodiment 9 emits light to the illuminated object with the above mechanism, thereby not only having the same effect as the light source devices according to Embodiments 1 to 8 but also allowing the fluorescent material layer 5 to be formed in a more stable manner.

This is because the fluorescent material layer 5 is formed on the outer periphery of the transparent casing 65, not on the surface on which the protrusions 65c serving as the structure for the transparent casing 65 to support the light guide 3 are formed, whereby the fluorescent material layer 5 (fluorescent material layer 51) can easily be formed on an even and flat surface. The light source device according to Embodiment 9 has the effect that the shape of the fluorescent material layer 5 does not restrict the structure for the transparent casing 65 to support the light guide 3.

FIG. 28B is a cross-sectional view of the light guide portion of the light source device according to a modified embodiment of Embodiment 9. The length in the short axis direction (width) of the opening 65a formed by the fluorescent material layer 5 described in FIG. 28B is smaller than the length in the short axis direction of the opening 65a formed by the fluorescent material layer 5 described in FIG. 28A. The length in the short axis direction of the opening 65a can be adjusted by the fluorescent material layer 5.

When the width of the fluorescent material layer 5 affects the complex light containing the light from the light source 1, as described above, the opening 65a formed by the fluorescent material layer 5 (fluorescent material layer 51) can be narrowed by positioning the light reflecting patterns 4 formed on the light guide 3. The opening 65a can be narrowed by positioning the ultraviolet shielding pattern 8 and/or light reflecting patterns 4.

The light source device according to Embodiment 9 can be constructed in the mode using the ultraviolet rays as in Embodiment 2 by replacing the light source 1 and fluorescent material layer 5 with the light source 11 and fluorescent material layer 51. In such a case, the complex light produced by the fluorescent material layer 51 is transmitted within the light guide 3 and yields white illumination light to the illuminated object through the opening 65a.

In other words, the fluorescent material layer 51 produces three-component complex light (mixed color light) subjected to conversion to light of wavelengths different from the ultraviolet rays. When an ultraviolet shield shielding the ultraviolet rays exiting from the opening 65a is necessary, the ultraviolet shielding pattern 8 (ultraviolet cutoff pattern 8, ultraviolet cutoff filter 8) as in Embodiments 1 to 8 can be formed on or near the light guide 3.

### Embodiment 10

In the light source devices according to Embodiments 1 to 9, the fluorescent material layer 5 or fluorescent material layer 51 reflects the light scattered or regularly reflected by the light reflecting patterns 4 and exiting from the outer periphery of the light guide 3 and emits light subjected to conversion to light of optical wavelengths different from that light. In addition, only the illumination of the illuminated object with the light reflected by the fluorescent material layer 5 (fluorescent material layer 51) and the complex light of lights having converted optical wavelengths is discussed.

However, in the light source devices according Embodiments 1 to 9, depending on the choice of structure and shape of the light source device, part of the complex light is reflected on the outer periphery of the light guide and enters (is emitted to) the fluorescent material layer again in some cases.

Furthermore, it was found that in some cases, part of the complex light does not head for the opening or the exit region, in other words part of the complex light is not mainly guided along the transversal path (transmission path) within the light guide, but is mainly propagated along the light guide path within the light guide and enters (is emitted into) the fluorescent material layer from the outer periphery of the light guide again (secondary excitation).

In the latter case, for example, the light entering at an angle larger than the total reflection angle from inside the light guide to the space as the exit to the illuminated object does not go outside the light guide but is propagated in the light guide, reflected by the light reflecting patterns, and emitted from the outer periphery of the light guide to the fluorescent material layer again. Incidentally, the secondary excitation occurs also to the light in the visible range contained in the complex light (mixed color light).

As described above, if the complex light is reemitted to the fluorescent material layer, the fluorescent material layer converts the optical wavelength again (secondary emission) and changes the fractions of wavelength components of the complex light, whereby complex light of a desired hue may not be obtained.

Particularly, repeated reemission increases the influence. Then, the secondary emission due to the secondary excitation may cause color deviation at positions of the light source device in the longitudinal direction. In other words, this may cause the evenness in color in the long axis direction to be impaired. The light source device according to Embodiment 10 reduces the possibility of reemitting the complex light to the fluorescent material layer.

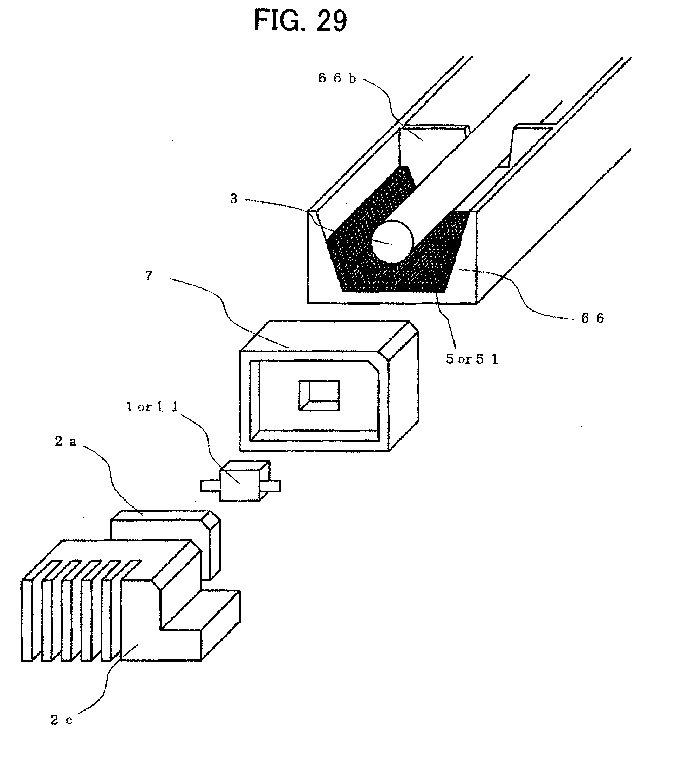

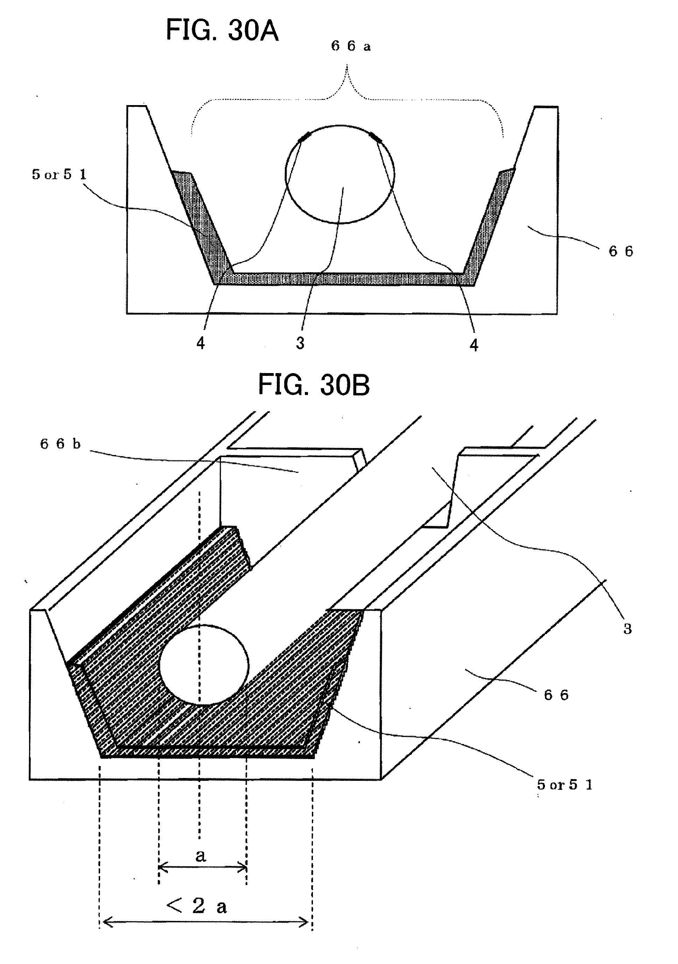

FIG. 29 is an exploded, perspective view of the vicinity of the holder of the light source device according to Embodiment 10 of the present disclosure. FIG. 30A is a cross-sectional view of the light source device according to Embodiment 10 when seen in the long axis direction. FIG. 30B is a perspective view of the light guide and casing of the light source device according to Embodiment 10. Incidentally, the explanation will be made using the cylindrical light guide 3 by way of example. Needless to say, the light guides 31 to 34 having an elliptical or polygonal cross-section can be used. The light reflecting patterns 4 are omitted in FIGS. 29 and 30B.

The light source 1 is disposed at an end of the light guide 3 to face the end face. The light source 1 is mounted on the substrate 2a. The substrate 2a is held by the holder 7 so that the light source 1 faces the end face of the light guide 3. The light source 1 is, for example, an LED (light emitting diode). In Embodiment 10, the light source 1 emits blue light of wavelengths of approximately 430 nm to 470 nm.

A casing 66 surrounds the outer periphery of the light guide 3 except for a strip-shaped opening 66a formed along the long axis direction of the light guide 3. The casing 66 exposes (or protrudes) part of the light guide 3 in the opening 66a. The fluorescent material layer 5 is formed on the bottom surface of the casing 66 that faces the opening 66a of the casing 66 and on the sidewalls of the casing 66 halfway from the bottom surface.

Assuming that the diameter of the light guide 3 is a, the length in the short axis direction of the bottom surface of the casing 66 is 2a or larger. A light guide support 66b is a wall formed on the bottom surface of the casing 66 periodically along the long axis direction to hold the light guide 3. The light guide support 66b has a notch formed to hold the light guide 3.

The mechanism of the light source device according to Embodiment 10 up to the light emitted by the light source 1 (light source 11) being scattered or regularly reflected by the light reflecting patterns 4 and exiting from the outer periphery of the light guide 3 is the same as in the light source devices of Embodiments 1 to 9. How the light source device according to Embodiment 10 can easily achieve even color in the long axis direction will be described hereafter.

The light scattered or regularly reflected by the light reflecting patterns 4 and exiting from the outer periphery of the light guide 3 is captured by the fluorescent material layer 5 (fluorescent material layer 51). The fluorescent material layer 5 reflects part of the captured light, absorbs part of the captured light, and emits excited fluorescence. As shown in FIG. 30B, assuming that the diameter of the light guide 3 in cross-section perpendicular to the long axis is a, the length in the short axis direction of the bottom surface of the casing 66 on which the fluorescent material layer 5 is formed is 2a or larger.

Therefore, the fraction of the complex light comprising the reflected light and fluorescence from the fluorescent material layer 5 that is emitted directly to the illuminated object through the opening 66a without reentering the light guide 3 is increased. Consequently, the fraction of the complex light that is emitted to the fluorescent material layer 5 again can be reduced. In other words, the secondary excitation can be suppressed.

As shown in FIG. 30A, if the sidewalls of the casing 66 (the fluorescent material layer 5 formed on the sidewalls) is increasingly separated from the light guide 3 toward the opening 66a, the fraction of the complex light that is emitted to the fluorescent material layer 5 again can further be reduced. In other words, the fluorescent material layer 5 is advisably so shaped in cross-section perpendicular to the long axis direction of the light guide 3 that the distance from the light guide 3 is increased as the fluorescent material layer 5 approaches the opening 66a.

It can also be said that in the light source device according to Embodiment 10, as the fluorescent material layer 5 approaches the opening 66a, the fluorescent material layer 5 emits part of the light (complex light) produced at the portion where the distance from the light guide 3 is increased directly to the illuminated object.

The light source device according to Embodiment 10 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 3. In such a case, the opening 66a tends to be larger than the openings in the other embodiments. Then, it is desirable that the ultraviolet shielding pattern 8 has a shape covering the opening 66a such as a transparent top panel. Furthermore, the transparent top panel can be integrated with the light guide 3.

### Embodiment 11

The light source device according to Embodiment 10 has the structure to suppress the secondary excitation using the dimensional relationship between the casing and light guide. On the other hand, the light source device according to Embodiment 11 virtually separates the light guide path and transversal path (transmission path, emitted fluorescence exit path) of the light guide to suppress the secondary excitation.

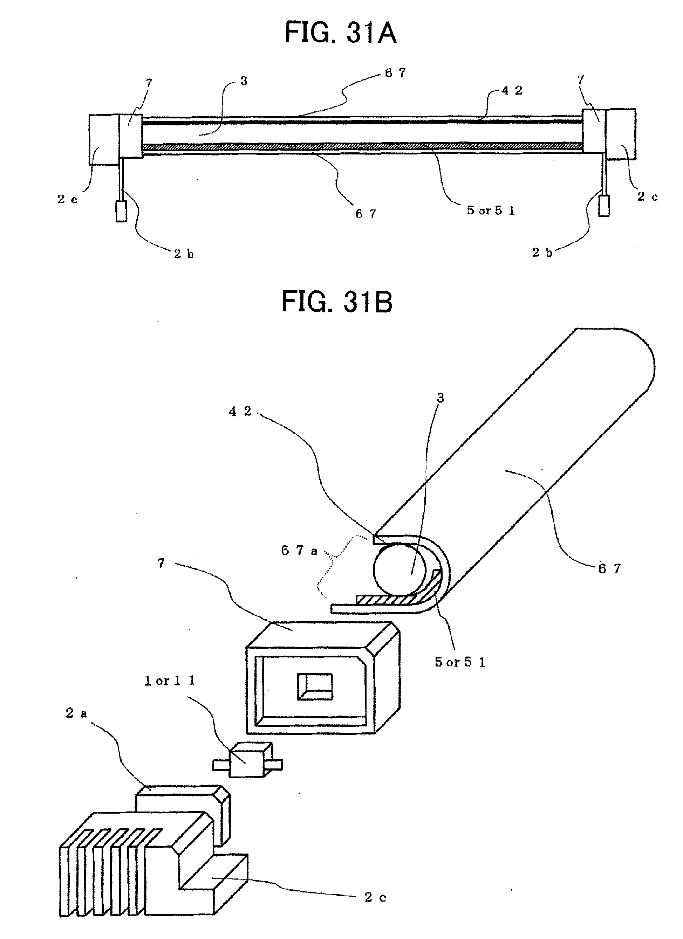

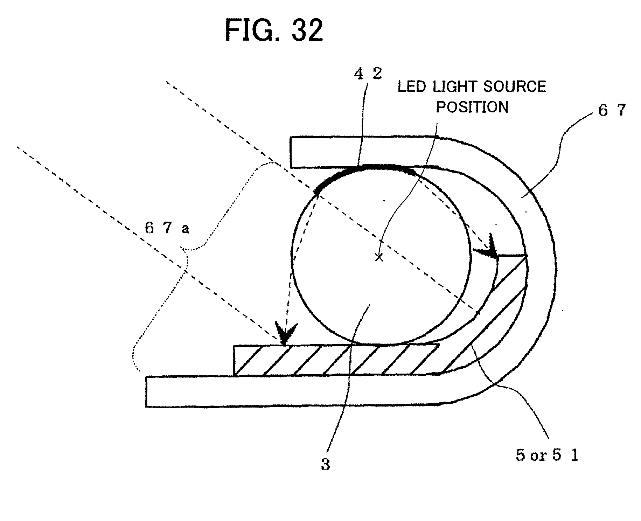

The light source device according to Embodiment 11 has two principal structures for separating the light guide path and transversal path of the light guide. In the first one, the fluorescent material layer is formed in the exit region that is the portion of the inner surface of the casing closer to the opening than the light guide, and the light reflecting pattern is formed at a position facing the fluorescent material layer in the exit region (for example, FIGS. 31 and 32).

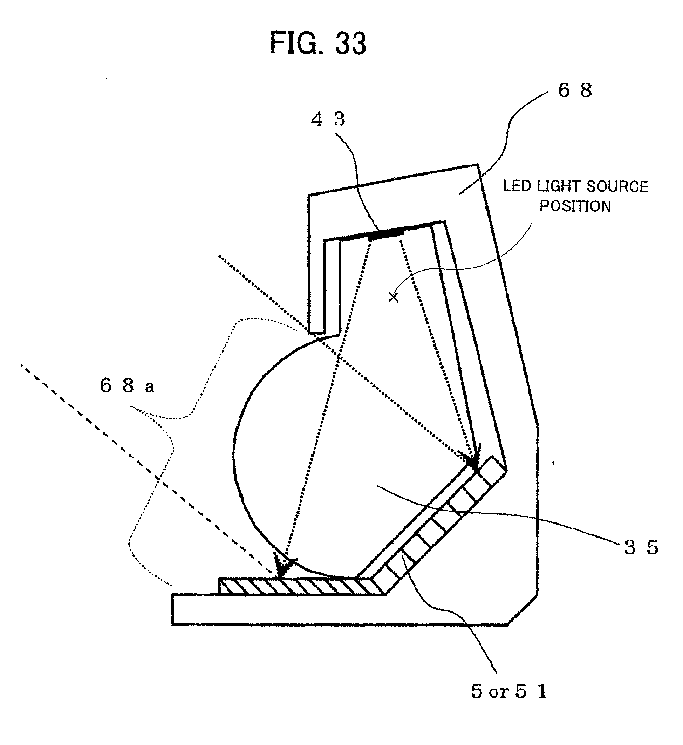

In the second one, no light reflecting pattern is provided near the exit region (opening) as in the other embodiments, and the light guide is shaped in cross section perpendicular to the long into a polygon of which a portion is protruding in an arc-shape (for example, FIGS. 33 to 35). The first structure can be combined with the second structure.

FIG. 31A is a cross-sectional view of the light source device according to Embodiment 11 of the present disclosure when seen in the direction perpendicular to the long axis of the light guide. FIG. 31B is an exploded, perspective view of the vicinity of the holder of the light source device according to Embodiment 11. FIG. 32 is a cross-sectional view of the light source device according to Embodiment 11 when seen in the long axis direction. Here, in FIGS. 32 to 35, the position of the light source 1 (light source 11) in a plane view in the long axis direction is marked as "LED LIGHT SOURCE POSITION." The basic mechanism of the light source device according to the Embodiment 11 is the same as the light source devices according to the other embodiments.

A casing 67 surrounds the outer periphery of the light guide 3 except for a strip-shaped opening 67a formed along the long axis direction of the light guide 3. The casing 67 exposes (or protrudes) part of the light guide 3 in the opening 67a. The casing 67 has a J-letter shape in cross-section perpendicular to the long axis, one of the facing sidewalls of which is extended.

The fluorescent material layer 5 (or fluorescent material layer 51) is formed mainly on the extended one of the facing sidewalls. The casing 67 holds the light guide 3 in a pinching manner. A linear light reflecting pattern 42 is provided along the long axis direction on the outer periphery of the light guide 3 including at least the position facing the portion where the fluorescent material layer 5 is so shaped in cross-section perpendicular to the long axis direction of the light guide 3 that the distance from the light guide 3 is increased as the fluorescent material layer 5 approaches the opening 67a via the interior of the light guide 3.

The light source device shown in FIG. 32 has a structure in which the fluorescent material layer 5 is so shaped in cross-section of perpendicular to the long axis direction of the light guide 3 that the distance from the light guide 3 is increased as the fluorescent material layer 5 approaches the opening 67a. Since the light reflecting pattern 42 faces the portion of the fluorescent material layer 5 via the interior of the light guide 3, an increased amount of light from the light source 1 heads for the opening 67a as complex light after being emitted to the fluorescent material layer 5 without being reemitted.

Consequently, the secondary excitation can be suppressed. In other words, the light source device described in FIGS. 31B and 32 emits part of the light produced at the portion where the distance of the fluorescent material layer 5 from the light guide 3 is increased as the fluorescent material layer 5 approaches the opening 67a directly to the illuminated object. Then, the light source device described in the FIGS. 31 and 32 virtually separates the light guide path and transversal path (transmission path, emitted fluorescence exit path) of the light guide 3.

FIG. 33 is a cross-sectional view of the light source device according to a different structure of Embodiment 11 when seen in the long axis direction. In FIG. 33, a light guide 35 is shaped in cross-section perpendicular to the long axis direction into a polygon of which a portion is protruding in an arc shape. A light reflecting pattern 43 is formed on one of the planes that are the side surfaces corresponding in cross-section to the sides of the polygon.

Furthermore, the light guide 35 is protruding in an arc shape at least on one side of the portion opposite to the light reflecting pattern 43 where the outer periphery is continuous. The cross-section perpendicular to the long axis direction is polygonal except for the arc-shaped, protruding portion. Furthermore, the portion of the light guide 35 opposite to the light reflecting pattern 43 in cross-section is linear and the linear portion is tilted toward the arc-shaped, protruding portion. An opening 68a protrudes (or exposes) the arc-shaped, protruding portion of the light guide 35.

In FIG. 33, a liner light reflecting pattern 43 is formed along the long axis direction on the outer periphery of the light guide 35 at a position facing the fluorescent material layer 5 formed at the position facing the above-described tilted portion of the light guide 35 via the interior of the light guide 35. The fluorescent material layer 5 is formed as far as near the edge of the opening 68a.

Furthermore, the fluorescent material layer 5 is so shaped in cross-section perpendicular to the long axis direction of the light guide 3 that the distance from the light guide 35 is increased as the fluorescent material layer 5 approaches the opening 68a. The light reflecting pattern 43 can reflect the light from the light source 1 toward the portion of the fluorescent material layer 5 via the interior of the light guide 35. A casing 68 surrounds the light guide 35 and protrudes (or exposes) part of the light guide 35 in the opening 68a in the form of a long groove along the long axis direction as described above.

In the light source device described in FIG. 33, the fluorescent material layer 5 is so shaped in cross-section perpendicular to the long axis direction of the light guide 35 that the distance from the light guide 35 is increased as the fluorescent material layer 5 approaches the opening 68a.

In addition, the light source device described in FIG. 33 has the light reflecting pattern 43 having a portion facing the portion of the fluorescent material layer 5 that is tilted toward the opening 68 via the interior of the light guide 35, whereby an increased amount of light from the light source 1 heads for the opening 68a as complex light after being emitted to the fluorescent material layer 5 (fluorescent material layer 51) without being reemitted. Consequently, the secondary excitation can be suppressed. Then, the light source device described in the FIG. 33 virtually separates the light guide path and transversal path (transmission path, emitted fluorescence exit path) of the light guide 35.

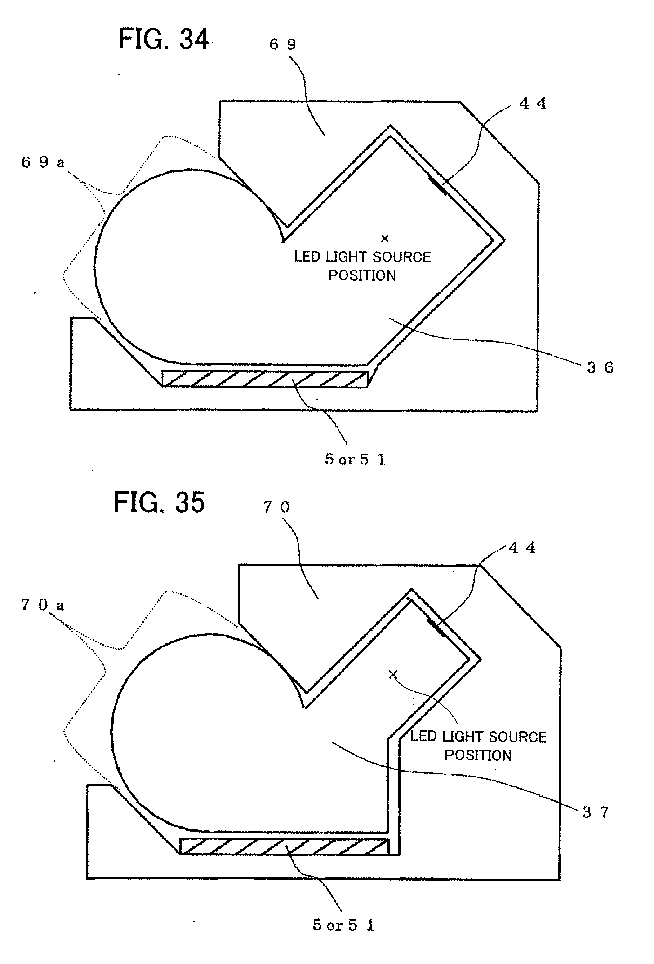

FIG. 34 is a cross-sectional view of the light source device according to a modified embodiment of Embodiment 11 when seen in the long axis direction. In FIG. 34, a light guide 36 is so shaped in cross-section perpendicular to the long axis direction that the light guide 36 is protruding in an arc shape at least on one side of the portion opposite to a light reflecting pattern 44 where the outer periphery is continuous. The cross-section perpendicular to the long axis direction excluding the protruding portion is polygonal.

The arc-shaped, protruding portion of the light guide 35 in FIG. 33 is semicircular or smaller than a semicircle in cross-section. On the other hand, the arc-shaped, protruding portion of the light guide 36 is a protrusion larger than a semicircle in cross-section. Furthermore, the light guide 36 is, like the light guide 35, linear in the portion opposite to a light reflecting pattern 44 in cross-section, and the liner portion is tilted toward the arc-shaped, protruding portion. An opening 69a protrudes (or exposes) the arc-shaped, protruding portion of the light guide 36.

A linear light reflecting pattern 44 is provided along the long axis direction on the outer periphery of the light guide 36 at a position facing the fluorescent material layer 5 formed at the position facing the above-described tilted portion of the light guide 36 via the interior of the light guide 36. The light reflecting pattern 44 can reflect the light from the light source 1 toward the portion of the fluorescent material layer 5 via the interior of the light guide 36. A casing 69 surrounds the light guide 36 and protrudes (or exposes) part of the light guide 36 in the opening 69a in the form of a long groove along the long axis direction as described above.

FIG. 35 is a cross-sectional view of the light source device according to a different modified embodiment of Embodiment 11 when seen in the long axis direction. A light guide 37 is so shaped that the surface in contact with the opposite end to an opening 70a of the portion of the light guide 37 facing the fluorescent material layer 5 is vertical (a vertical surface), not tilted.

The light guide 37 is so shaped in cross-section perpendicular to the long axis direction that the light guide 37 is gouged between the vertical portion and the portion where the light reflecting pattern 44 is formed (the gouged surface). A casing 70 surrounds the light guide 37 and protrudes (or exposes) part of the light guide 37 in the opening 70a in the form of a long groove along the long axis direction.

In the light source device described in FIG. 34, the light reflecting pattern 44 faces the portion of the fluorescent material layer 5 tilted toward the opening 69a via the interior of the light guide 36. Then, an increased amount of light from the light source 1 heads for the opening 69a as complex light after being emitted to the fluorescent material layer 5 without being reemitted. Consequently, the secondary excitation can be suppressed. It can be said that the light source device described in the FIG. 34 virtually separates the light guide path and transversal path (transmission path, emitted fluorescence exit path) of the light guide 36.

Since the light guide 37 has the above-described vertical surface and gouged surface formed, the light source device described in FIG. 35 further reduces the fraction of the light from the light source 1 that is reemitted to the fluorescent material layer 5 after being reflected by the light reflecting pattern 44 and emitted to the fluorescent material layer 5.

Consequently, the amount heading for the opening 70a as complex light is increased compared with the light source device described in FIG. 34. It can be said that the light source device described in the FIG. 35 virtually separates the light guide path and transversal path (transmission path, emitted fluorescence exit path) of the light guide 37.

In the light source device according to Embodiment 11, the light guide 35 can be called a semicircle-added polygonal light guide 35 and the light guide 36 and light guide 37 can be called a circle-polygon combined light guide 36 and a circle-polygon combined light guide 37. Furthermore, the portion of the light guides 35, 36, and 37 opposite to the light reflecting pattern 43 or 44 in cross-section perpendicular to the long axis is linear and the linear portion is tilted toward the arc-shaped, protruding portion. This linear shape can be a bow shape.

It is sufficient that an imaginary line on which the bow shape virtually extends coincides with an imaginary line on which the above-described linear shape extends. In other words, it is sufficient that an imaginary line on which the bow shape virtually extends is tilted toward the arc-shaped, protruding portion. The bow shape can a shape gouged into the light guide 35, light guide 36, or light guide 37 or a shape bulging out from the light guide 35, light guide 36, or light guide 37.

The light source device according to Embodiment 11 can be constructed in the mode using the ultraviolet rays as in Embodiment 2 by replacing the light source 1 and fluorescent material layer 5 with the light source 11 and fluorescent material layer 51 and forming the ultraviolet shielding pattern 8 on the light guide 35 to 37. In such a case, it is desirable that the ultraviolet shielding pattern 8 has a shape covering the opening 68a to 70a such as a transparent top panel. Furthermore, the transparent top panel can be integrated with the light guide 35 to 37.

### Embodiment 12

Embodiment 12 utilizes the shape of the casing to suppress the secondary excitation (secondary emission). More specifically, the angle at which the complex light containing excited light is output from the fluorescent material layer 5 (fluorescent material layer 51) to the light guide (the emission angle to the light guide 3) is limited to the casing side of the light guide 3 to suppress the secondary excitation (secondary emission).

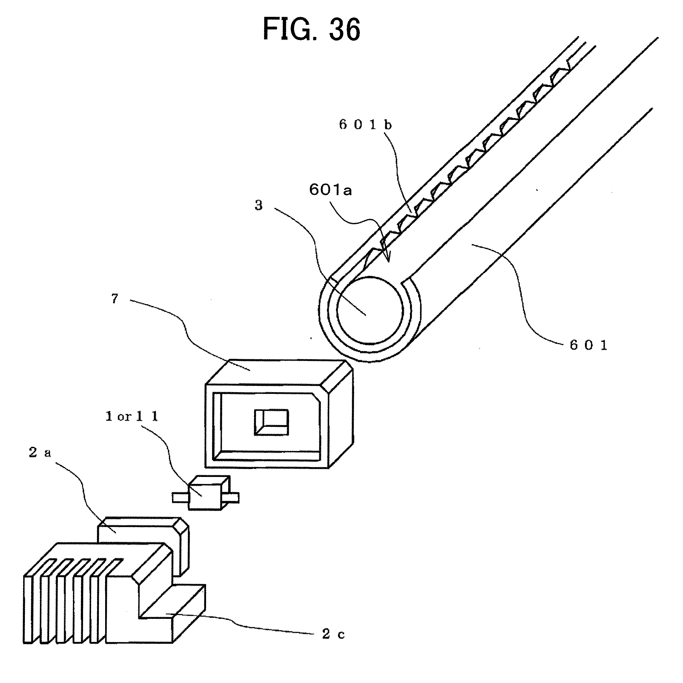

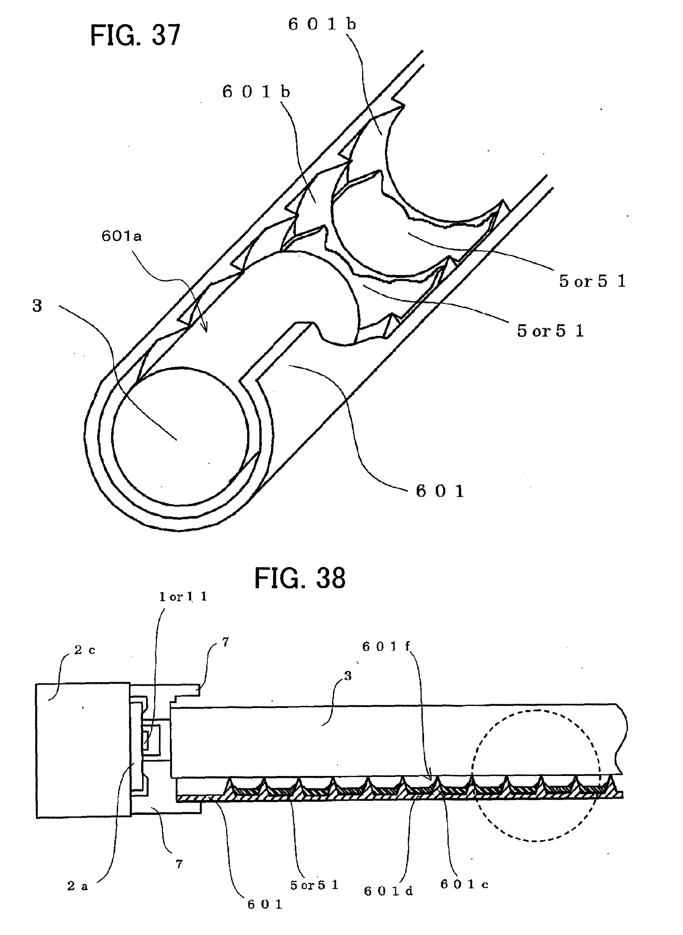

FIG. 36 is an exploded, perspective view of the vicinity of the holder of the light source device according to Embodiment 12 of the present disclosure. FIG. 37 is a perspective view of the light guide portion of the light source device according to Embodiment 12. FIG. 38 is a cross-sectional view of the vicinity of the holder of the light source device according to Embodiment 12.

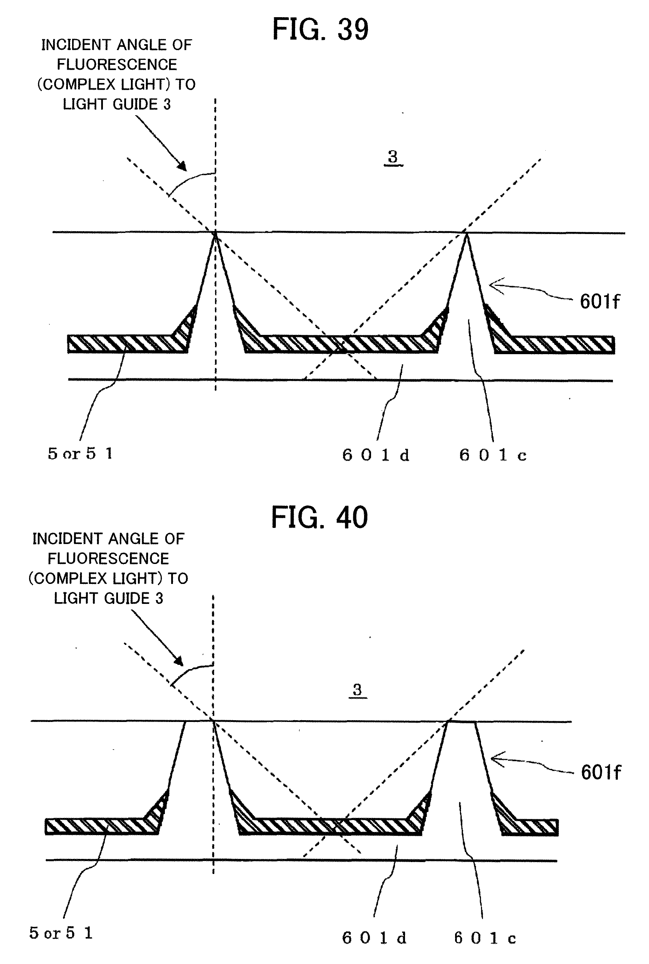

FIGS. 39 to 42 are detailed, cross-sectional views of the casing and fluorescent material layer of the light source device according to Embodiment 12. FIGS. 39 to 42 are enlarged views corresponding to the circled portion (dotted line) described in FIG. 38. FIGS. 39 to 42 show exemplary structures adaptable in Embodiment 12.

The basic mechanism of the light source device according to Embodiment 12 is the same as the light source devices according to the other embodiments. In FIG. 36 to 42, although the light reflecting patterns 4 are omitted, the light reflecting patterns 4 are the same as those described in the other embodiments.

A casing 601 surrounds the outer periphery of the light guide 3 except for a strip-shaped opening 601 a formed along the long axis direction of the light guide 3. The casing 601 exposes (or protrudes) part of the light guide 3 in the opening 601 a. Multiple raised portions 601c (first raised portions) and recessed portions 601 d (first recessed portions) are alternately formed along the long axis direction on the surface of the casing 601 (the inner surface) that surrounds the light guide 3. The raised portions 601 c have a ridge line in a plane perpendicular to the long axis direction and the recessed portions 601d have a trough line in a plane perpendicular to the long axis direction.

The level difference between the raised portions 601 c and recessed portions 601d forms protrusions 601b. The light guide 3 is supported by the vertexes of the raised portions 601c (the protrusions 601b). Apart from the raised portions 601 c and recessed portions 601d, taller protrusions 601 b can be provided to support the light guide 3. It can be said that the raised portions 601 c (protrusions 601b) are light guide-holding walls formed in the casing 601.

Incidentally, it is sufficient that the fluorescent material layer 5 (fluorescent material layer 51) is provided at least on the recessed portions 601d of the casing 601. The fluorescent material layer 5 (fluorescent material layer 51) can be formed on the oblique surfaces 601f of the raised portions 601c or on the oblique surfaces 601f hallway.

Here, the oblique surfaces 601f are inclined surfaces formed by the raised portions 601 c and recessed portions 601d. For convenience, the oblique surfaces 601 f include walls (wall surfaces) perpendicular to the recessed portions 601d. Protrusions 601e are protrusions formed on the recessed portions 601d and smaller in height than the raised portions 601 c.

In the light source device according to Embodiment 12, as shown in FIGS. 37 to 39, light from the light source 1 (light source 11) is reflected by the light reflecting patterns 4 and emitted to the fluorescent material layer 5 (fluorescent material layer 51). The fluorescence (complex light) reflected and excited by the fluorescent material layer 5 (fluorescent material layer 51) is emitted to the light guide 3. At the time, the raised portions 601 c of the casing 601 allow the light having limited incident angles to the light guide 3 to be transmitted into the light guide 3, whereby wide incident angles in the longitudinal direction are restricted.

Consequently, the entrance of complex light into the transversal path (transmission path, emitted fluorescence exit path) becomes predominant over the entrance of complex light into the light guide path, whereby the secondary excitation (secondary emission) can be suppressed.

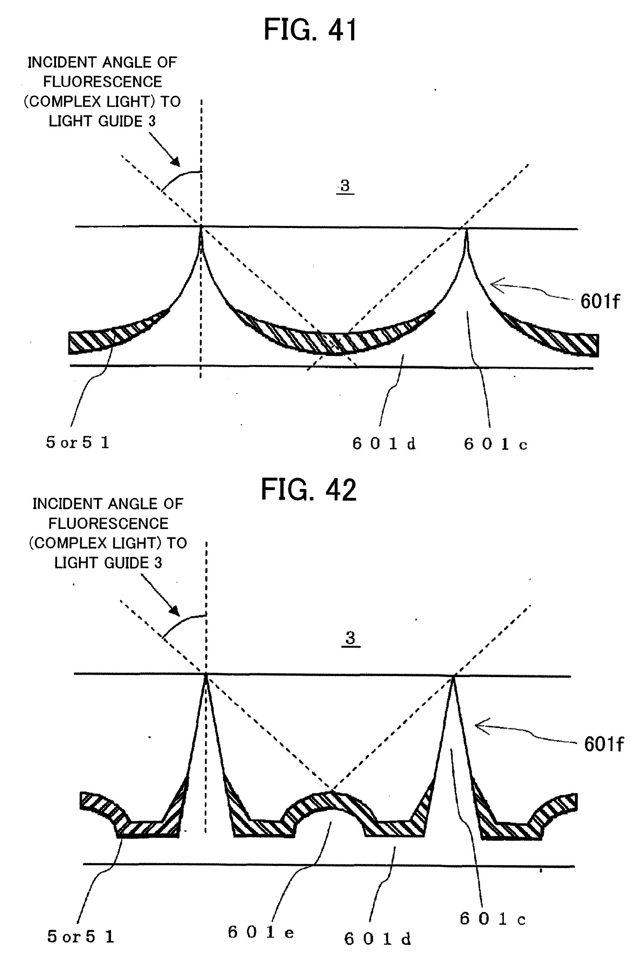

In Embodiment 12, the raised portions 601c can have a pointed vertex (ridge) as shown in FIGS. 39, 41, and 42 or a flat vertex as shown in FIG. 40. Furthermore, the recessed portions 601d can have a flat bottom as shown in FIGS. 39 and 40. The incident angle to the light guide 3 can be adjusted without changing the height and/or shape of the raised portions 601c by making the bottom surface of the recessed portions 601d curved as shown in FIG. 41 or forming the protrusions 601e as shown in FIG. 42.

The casing 601 of the light source device according Embodiment 12 is applicable to the casing of the image-reading line light source according to the other embodiments. In the case of the casing of the light source device according to Embodiment 9, the fluorescent material layer 5 (fluorescent material layer 51) is positioned differently.

### Embodiment 13

In Embodiment 13, multiple recessed portions and raised portions along the direction perpendicular to the long axis direction are alternatively formed on the surface of the casing that surrounds the light guide so that the output angle of the complex light is directed toward the opening of the casing. Thus, the secondary excitation (secondary emission) is suppressed. Furthermore, a combined mode of the light source device according to Embodiment 13 and the light source device according to Embodiment 12 will be described.

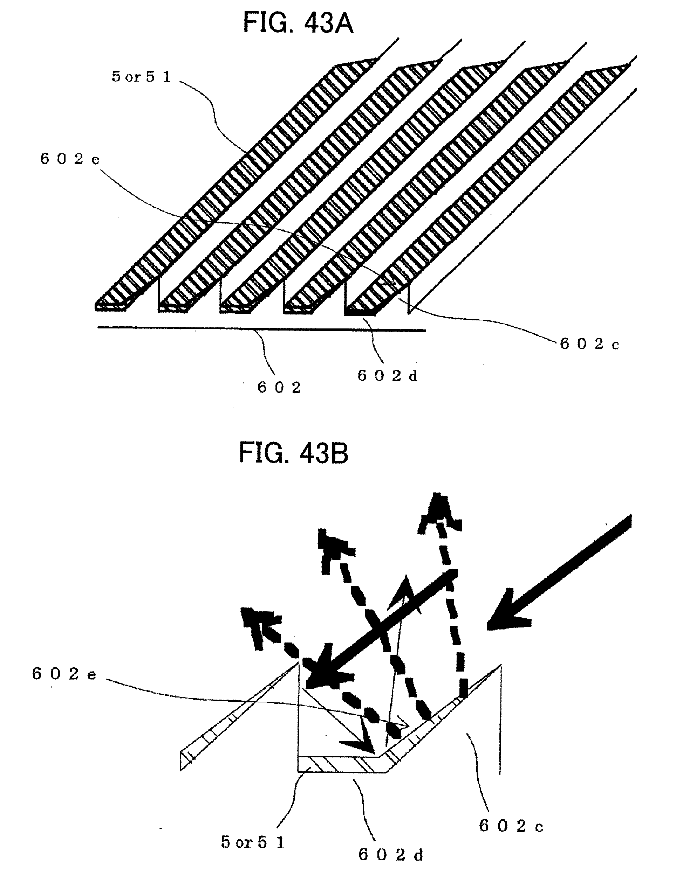

FIG. 43A is a detailed, perspective view of the casing and fluorescent material layer of the light source device according to Embodiment 13 of the present disclosure. FIG. 43B is a cross-sectional view for explaining the mechanism of limiting the output angle of the complex light to the opening side of the casing.

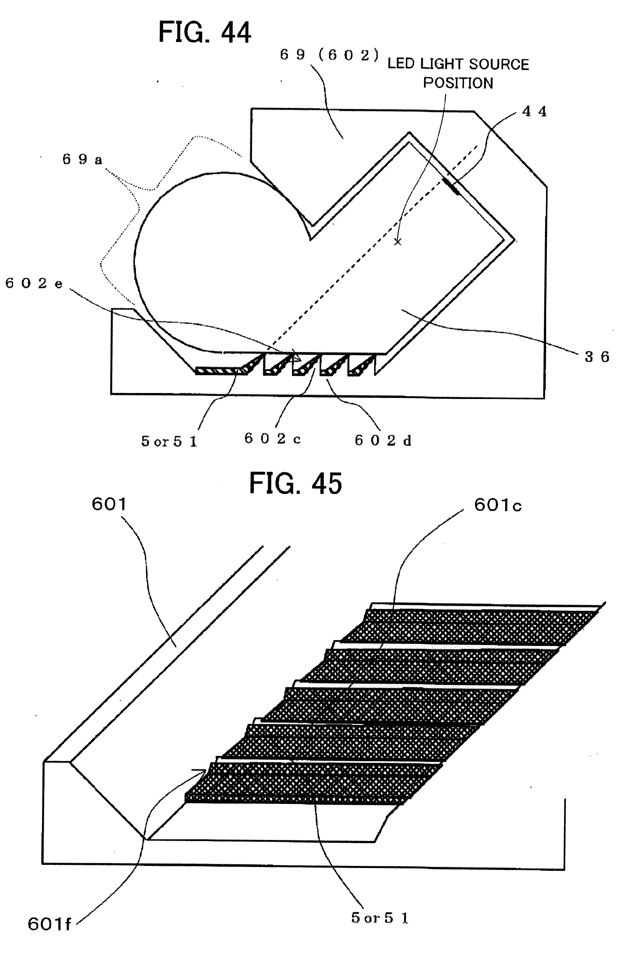

FIG. 44 is a cross-sectional view of the light source device according to Embodiment 13 when seen in the long axis direction. FIG. 44 shows a case in which the structure of Embodiment 13 is applied to the light source device of Embodiment 11 shown in FIG. 34.

In FIGS. 43A to 46, although the light reflecting patterns 4 are omitted, the light reflecting patterns 4 are the same as those described in the other embodiments. The basic mechanism of the light source device according to Embodiment 13 is the same as that of the light source devices according to the other embodiments.

A casing 602 surrounds the outer periphery of the light guide 3 except for a strip-shaped opening 6a (opening 69a) formed along the long axis direction of the light guide 3 (light guide 36). The casing 602 exposes (or protrudes) part of the light guide 3 (light guide 36) in the opening 6a (opening 69a). Multiple raised portions 602c (second raised portions) and recessed portions 602d (second recessed portions) are alternately formed in the direction perpendicular to the long axis direction on the surface of the casing 602 (the inner surface) that surrounds the light guide 3.

The raised portions 602c have a ridge line parallel to the long axis direction and the recessed portions 602d have a trough line parallel to the long axis direction. The raised portions 602c have an oblique surface 602e facing toward the opening 6a (opening 69a).

The fluorescent material layer 5 (fluorescent material layer 51) is formed on the recessed portions 602d and oblique surfaces 602e of the casing 602. The level difference between the recessed portions 602d and raised portions 602c form protrusions 602b. The light guide 3 (light guide 36) is supported by the vertexes of the raised portions 602c (protrusions 602b).

Apart from the recessed portions 602d and raised portions 602c, taller protrusions 602b can be provided to support the light guide 3. It can be said that the raised portions 602c (protrusions 602b) are light guide-holding walls formed in the casing 602.

In the light source device described in FIGS. 43A to 44, the fluorescent material layer 5 (fluorescent material layer 51) formed on the oblique surfaces 602e facing toward the opening 6a (opening 69a) directs the light from the light source 1 (light source 11) towards the opening 6a (opening 69a), namely toward the transversal path (transmission path, emitted fluorescence exit path) as complex light. Consequently, the secondary excitation can be suppressed.

The arrows in FIG. 43B present light from the light source 1 (light source 11) that exits from the light guide 3 (light guide 36), fluorescence excited by the fluorescent material layer 5 (fluorescent material layer 51), and reflected light. The thick solid line arrows present the light exiting from the light guide 3. The thin solid line arrows present the reflected light from the raised portions 602c or fluorescent material layer 5. The dotted line arrows present the fluorescence emitted by the fluorescent material layer 5.

As seen from FIGS. 43B and 44, a quantity of light in the fluorescence emitted by the fluorescent material layer 5 heads for the opening 6a (opening 69a). Therefore, the light source device described in FIGS. 43A to 44 virtually separates the light guide path and transversal path (transmission path, emitted fluorescence exit path) of the light guide 3 (light guide 36).

FIG. 45 is a detailed, perspective view of the casing and fluorescent material layer of the light source device according to Embodiment 12. FIG. 45 is given for comparison with the structure of Embodiment 13. As shown in FIG. 45, the ridge lines of the raised portions 601 c of the casing 601 are in planes perpendicular to the long axis direction in Embodiment 12.

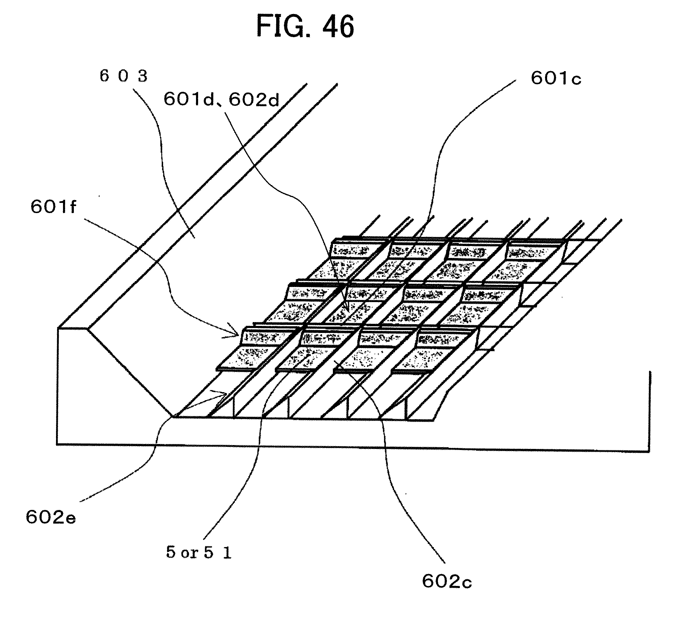

FIG. 46 is a detailed, perspective view of the casing and fluorescent material layer of the light source device according to Embodiment 13. FIG. 46 shows the structure of a combination of Embodiments 12 and 13. A casing 603 surrounds the light guide 3 and exposes or protrudes part of the light guide 3 in an opening in the form of a long groove along the long axis direction.

Multiple recessed portions 601d (first recessed portions) and raised portions 601c (first raised portions) are alternately formed along the long axis direction on the surface of the casing 603 that surrounds the light guide 3. The trough lines of the recessed portions 601d and ridge lines of the raised portions 601c are each in a plane perpendicular to the long axis direction.

Furthermore, multiple recessed portions 602d (second recessed portions) and raised portions 602c (second raised portions) are alternately formed along the direction perpendicular to the long axis direction on the surface that surrounds the light guide 3. The raised portions 602c have an oblique surface 602e facing toward the opening.

A recessed portion 601d interposed between adjoining raised portions 601 c is also a recessed portion 602d interposed between adjoining raised portions 602c. The trough lines of the recessed portions 602d and ridge lines of the raised portions 602c are parallel to the long axis direction.

The fluorescent material layer 5 (fluorescent material layer 51) is formed on multiple recessed portions formed in a lattice pattern by the recessed portions 602d and recessed portions 601d and on the oblique surfaces 602e of the casing 603. Incidentally, the light guide 3 is supported by at least either the vertexes of the raised portions 601 c (protrusions 601b) of the casing 603 or the vertexes of the raised portions 602c (protrusions 602b) of the casing 603.

The light guide support structure of the casing 603 and the raised portions 601 c and 602c of the casing 603 that limit the incident angle of the light produced by the fluorescent material layer 5 to the light guide can be formed in an integrated manner.

The casing 603 in the mode combined with Embodiment 12 has the structure as shown in FIG. 46. The raised portions 601c of the casing 603 allow the light having limited incident angles to the light guide 3 to be transmitted into the light guide 3, whereby wide incident angles are restricted and the entrance of complex light into the transversal path (transmission path, emitted fluorescence exit path) becomes predominant over the entrance of complex light into the light guide path.

Furthermore, the fluorescent material layer 5 (fluorescent material layer 51) formed on the oblique surfaces 602e facing toward the opening (for example, the opening 69a; see FIG. 44) of the casing 603 directs the light from the light source 1 (light source 11) toward the opening, namely the transversal path (transmission path, emitted fluorescence exit path) as complex light. Consequently, the light source device according to Embodiments 12 and 13 has both effects.

The light source device according to the present application comprises liner light reflecting patterns formed along the long axis direction on the outer periphery of the light guide at positions facing at least part of a fluorescent material layer via the interior of the light guide, the fluorescent material layer is provided at least either between the surface of a casing that surrounds the light guide and the outer periphery of the light guide or on the surface of the casing opposite to the surface surrounding the light guide, absorbs light entering the light guide from the end, and emits excited fluorescence.

Then, in the course of the light having entered therein from the end being propagated in the light guide, the fluorescent material layer captures the light scattered or regularly reflected by the light reflecting patterns and exiting from the outer periphery of the light guide, reflects the light, and produces light subjected to conversion to light of optical wavelengths different from that light.

The light produced by the fluorescent material layer is transmitted into the light guide, and the light having entered therein from the end and the light produced by the fluorescent material layer are emitted to the illuminated object from a portion of the light guide that is exposed or protruding from the casing. Needless to say, the structures in Embodiments 1 to 13 can be combined as appropriate.

The present application claims the priority based on Japanese Patent Application No. 2012-057522, filed on March 14, 2012, including the specification, scope of claims, drawings, and abstract. The disclosed contents of this original patent application are entirely incorporated herein by reference.

### List of Reference Signs

- 1: Light source (blue LED)
- 2: LED circuit
- 2a: Substrate
- 2b: Connector
- 2c: Heat-releasing plate
- 3: Light guide
- 4: Light reflecting pattern (light guide reflecting pattern, light scattering pattern)
- 5: Fluorescent material layer
- 6: Casing
- 6a: Opening
- 6b: Protrusion
- 6c: Protrusion
- 601: Casing
- 601b: Protrusion
- 601c: Raised portion
- 601d: Recessed portion
- 601e: Protrusion
- 601f: Oblique surface (wall surface)
- 602: Casing (reflecting plate)
- 602b: Protrusion
- 602c: Raised portion
- 602d: Recessed portion
- 602e: Oblique surface
- 603: Casing (reflecting plate)
- 7: Holder
- 8: Ultraviolet shielding pattern (ultraviolet cutoff pattern, ultraviolet cutoff filter)
- 11: Light source (ultraviolet radiation source)
- 31: Light guide (elliptical light guide)
- 32: Light guide (elliptical light guide)
- 33: Light guide (pentagonal prism-shaped light guide)
- 34: Light guide (quadratic prism-shaped, beveled light guide)
- 35: Light guide (semicircle-added polygonal light guide)
- 36: Light guide (circle-polygon combined light guide)
- 37: Light guide (circle-polygon combined light guide)
- 41: Light reflecting pattern (light guide reflecting pattern, light scattering pattern)
- 42: Light reflecting pattern (light guide reflecting pattern, light scattering pattern)
- 43: Light reflecting pattern (light guide reflecting pattern, light scattering pattern)
- 44: Light reflecting pattern (light guide reflecting pattern, light scattering pattern)
- 51: Fluorescent material layer
- 61: Casing (reflecting plate)
- 61a: Opening
- 61b: Protrusion
- 62: Casing (reflecting plate)
- 62a: Opening
- 62b: Protrusion
- 62c: Cutaway portion (light guide cutaway portion)
- 63: Casing (reflecting plate)
- 63a: Opening
- 63b: Protrusion
- 63c: Cutaway portion
- 64: Casing (reflecting plate)
- 64a: Opening
- 64b: Protrusion
- 64c: Cutaway portion (light guide beveled portion)
- 65: Transparent casing (outer shell pipe)
- 65a: Opening
- 65b: Protrusion
- 65c: Protective sheet (outermost shell pipe)
- 66: Casing (reflecting plate)
- 66a: Opening
- 66b: Light guide support
- 67: Casing (reflecting plate, J-shaped casing)
- 67a: Opening
- 68: Casing (reflecting plate)
- 68a: Opening
- 69: Casing (reflecting plate)
- 69a: Opening
- 70: Casing (reflecting plate)
- 70a: Opening

## Claims

1. A light source device, comprising:
- a light source emitting light;
- a rod-shaped light guide at an end of which the light source is disposed, and propagating the light emitted from the light source and entering therein from the end in the long axis direction;
- a fluorescent material layer surrounding the outer periphery of the light guide except for an opening continuous along the long axis direction of the light guide, exposing or protruding part of the light guide in the opening, absorbing part of light exiting from the outer periphery of the light guide, and emitting excited fluorescence; and
- a linear light reflecting pattern provided along the long axis direction on the outer periphery of the light guide at a position facing at least part of the fluorescent material layer via the interior of the light guide,
- wherein in the course of the light having entered therein from the end being propagated in the light guide, the fluorescent material layer captures the light scattered or regularly reflected by the light reflecting pattern and exiting from the outer periphery of the light guide, reflects part of the captured light, and emits light of wavelengths different from that light, the light emitted by the fluorescent material layer is transmitted into the light guide, and the light having entered therein from the end and the light emitted by the fluorescent material layer are emitted to an illuminated object from a portion of the light guide that is exposed or protruding in the opening of the fluorescent material layer.

2. The light source device according to claim 1,
comprising a casing surrounding the outer periphery of the light guide except for a stripe-shaped opening formed along the long axis direction of the light guide and exposing or protruding part of the light guide in the opening, wherein the fluorescent material layer is interposed between the surface of the casing that surrounds the light guide and the light guide.

3. The light source device according to claim 2,
wherein the casing comprises first raised portions having a ridge line in a plane perpendicular to the long axis direction and first recessed portions having a trough line in a plane perpendicular to the long axis direction that are alternately formed on the surface of the casing that surrounds the light guide, and
wherein the fluorescent material layer is formed on the first recessed portions and the light having limited incident angles to the light guide is transmitted into the interior of the light guide from the first raised portions.

4. The light source device according to claim 2 or 3,
wherein the casing comprises second raised portions having a ridge line parallel to the long axis direction and second recessed portions having a trough line parallel to the long axis direction that are alternately formed on the surface of the casing that surrounds the light guide,
wherein the second raised portions comprise an oblique surface facing toward the opening of the casing, and
wherein the fluorescent material layer is formed on the second recessed portions and oblique surfaces.

5. The light source device according to claim 3 or 4,
wherein the light guide is supported by the vertexes of the first raised portions or by the vertexes of the second raised portions of the casing.

6. The light source device according to claim 1,
comprising:
a transparent casing surrounding the outer periphery of the light guide at least over the range surrounded by the fluorescent material layer and transmitting the light emitted by the light source and the light emitted by the fluorescent material layer,
wherein the fluorescent material layer is formed on the surface of the transparent casing that is opposite to the surface surrounding the light guide.

7. The light source device according to any one of claims 1 to 6,
wherein the light guide is circular or polygonal in cross-section perpendicular to the long axis direction.

8. The light source device according to any one of claims 2 to 5,
wherein the light guide is so shaped in cross-section perpendicular to the long axis direction that the light guide is protruding in an arc shape at least on one side of the portion facing the light reflecting pattern where the outer periphery is continuous.

9. The light source device according to claim 8,
wherein the opening of the casing exposes or protrudes the portion of the light guide that is protruding in an arc shape.

10. The light source device according to claim 8 or 9,
wherein the light guide is so shaped in cross-section perpendicular to the long axis direction that the light guide is linear in the portion facing the light reflecting pattern and the linear portion is tilted toward the portion protruding in an arc-shape.

11. The light source device according to any one of claims 1 to 10,
wherein the fluorescent material layer is so shaped in cross-section in the direction perpendicular to the long axis direction of the light guide that the distance from the light guide is increased as the fluorescent material layer approaches the opening on the side surface of the light guide that is not covered with the fluorescent material later.

12. The light source device according to claim 11,
wherein part of the light produced at the portion of the fluorescent material layer where the distance from the light guide is increased is emitted directly to the illuminated object.

13. The light source device according to any one of claims 1 to 12,
wherein the light source emits light containing blue light.

14. The light source device according to any one of claims 1 to 12,
wherein the light source emits light containing ultraviolet rays.

15. The light source device according to claim 14,
comprising an ultraviolet shield shielding the ultraviolet rays emitted from the light guide through the opening of the fluorescent material layer.

16. The light source device according to claim 15,
wherein the ultraviolet shield is an ultraviolet shielding pattern provided along the long axis direction on the outer periphery of the light guide.
